(19) Europäisches Patentamt
European Patent Office
Office européen des brevets

(11) **EP 2 963 718 B1**

(12) **EUROPEAN PATENT SPECIFICATION**

(45) Date of publication and mention
of the grant of the patent:
**26.07.2017 Bulletin 2017/30**

(21) Application number: **15170368.3**

(22) Date of filing: **03.06.2015**

(51) Int Cl.:
*H01M 8/0612* (2016.01)   *H01M 8/04014* (2016.01)
*H01M 8/0432* (2016.01)   *H01M 8/04664* (2016.01)
*F23N 3/00* (2006.01)   *F23N 5/24* (2006.01)
*F23C 13/00* (2006.01)   *H01M 8/124* (2016.01)

(54) **FUEL CELL SYSTEM**

BRENNSTOFFZELLENSYSTEM

SYSTÈME DE PILE À COMBUSTIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2014 JP 2014134610**

(43) Date of publication of application:
**06.01.2016 Bulletin 2016/01**

(73) Proprietor: **AISIN SEIKI KABUSHIKI KAISHA
Kariya-shi, Aichi 448-8650 (JP)**

(72) Inventor: **Ohkawara, Hiroki
Kariya-shi, Aichi 448-8650 (JP)**

(74) Representative: **TBK
Bavariaring 4-6
80336 München (DE)**

(56) References cited:
**EP-A2- 2 639 874    WO-A1-2013/094379**

# EP 2 963 718 B1

**Description**

TECHNICAL FIELD

This disclosure relates to a fuel cell system.

BACKGROUND DISCUSSION

An example of a fuel cell system disclosed in JP 2002-316801A (Reference 1) is known. As illustrated in Fig. 1 of Reference 1, such a fuel cell system includes a reforming section (catalytic reforming 3), a fuel cell (fuel cell stack 1), and a catalytic combustor (9). The reforming section (catalytic reforming 3) generates a reformed gas containing hydrogen from water for reforming and a raw reforming material. The fuel cell (fuel cell stack 1) generates electricity using the reformed gas and the air. The catalytic combustor (9) combusts an anode off gas which is discharged from the fuel cell, and a cathode off gas using a catalytic reaction.

In the fuel cell system disclosed in Reference 1, the flow rate of the anode off gas and a component concentration of the anode off gas which flow in the catalytic combustor are detected. Based on this detection result, the volume of air which is fed to the catalytic combustor is controlled such that the temperature of the catalytic combustor is caused to become an allowable temperature.

If a catalytic reaction in a catalytic combustor is degraded due to foreign substances being attached to a surface of the catalytic combustor, combustible components introduced into the catalytic combustor are not completely combusted in the catalytic combustor, and thus some or all of the combustible components are discharged to the outside of the fuel cell system as is. In the fuel cell system disclosed in Reference 1, no technology for detecting degradation of the catalytic reaction in the catalytic combustor is disclosed.

Another example of a fuel cell system is disclosed in EP 2 639 874 A2 (Reference 2). The fuel cell system disclosed in Reference 2 includes the features set forth in the preamble of claim 1.

SUMMARY

Thus, a need exists for detecting degradation of a catalytic reaction of a catalytic combustor in a fuel cell system which includes the catalytic combustor.

A first aspect of this disclosure is directed to a fuel cell system which includes the features set forth in claim 1.

When the catalytic reaction of the catalytic combustor is not degraded, if the flow rate of the combustible component which is introduced into the catalytic combustor and is not combusted is increased, the combustible component in the catalytic combustor is subjected to complete combustion and the temperature of the catalytic combustor increases compared to before the flow rate of the combustible component is increased. Regardless of whether or not the flow rate of the combustible component which is introduced into the catalytic combustor and is not combusted is increased, compared to before the flow rate of the combustible component is increased, when the temperature of the catalytic combustor does not increase, or when the temperature of the catalytic combustor hardly increases, a state in which the combustible component is not combusted in the catalytic combustor or the combustible component is incompletely combusted in the catalytic combustor occurs due to degradation of the catalytic reaction in the catalytic combustor. Using this principle, the determining section may determine whether or not the catalytic reaction in the catalytic combustor is degraded, based on the temperature of the catalytic combustor, which is detected by the temperature detecting section when the oxygen proportion changing section decreases the oxygen proportion so as to become a determination oxygen proportion lower than an incomplete combustion start oxygen proportion which causes the combustible component to be incompletely combusted in the combusting section. With this configuration, incomplete combustion occurs in the combusting section and the combustible component which is not combusted in the combusting section is reliably introduced into the catalytic combustor. For this reason, it is possible to reliably determine degradation of the catalytic reaction in the catalytic combustor.

A second aspect of this disclosure is directed to the first aspect of this disclosure, wherein the oxygen proportion changing section decreases the oxygen proportion so as to become the determination oxygen proportion by increasing the flow rate of the fuel which is fed by the fuel feeding section compared to before the oxygen proportion is decreased so as to become the determination oxygen proportion. With this configuration, it is possible to reliably increase the flow rate of the combustible component which is fed to the combusting section, and to decrease an oxygen proportion of a gas introduced into the combusting section so as to become the determination oxygen proportion. For this reason, it is possible to reliably cause incomplete combustion to occur in the combusting section, and to reliably introduce the combustible component which is not combusted in the combusting section, into the catalytic combustor. Accordingly, it is possible to reliably determine degradation of the catalytic reaction in the catalytic combustor. Since a fed amount of the fuel is increased instead of reduction in the feeding of the oxidant gas when the oxygen proportion is decreased, it is possible to prevent suspension of the fuel cell system due to insufficiency of oxygen in the fuel cell. Further, it is possible to determine degradation of the catalytic reaction in the catalytic combustor while an operation of the fuel cell system continues.

A third aspect of this disclosure is directed to the first aspect of this disclosure, wherein the fuel cell system further includes a sweep current changing section that changes a sweep current which is a current drawn from the fuel cell; and an oxidant gas feeding section that feeds the oxidant gas to the fuel cell, and the oxygen proportion changing section decreases the oxygen proportion so as to become the determination oxygen proportion by controlling the sweep current changing section to decrease the sweep current and controlling the oxidant gas feeding section to decrease the flow rate of the oxidant gas by the flow rate of the oxidant gas which occurs following a decrease in the sweep current compared to before the oxygen proportion is decreased so as to become the determination oxygen proportion. With this configuration, decreasing the sweep current causes the flow rate of hydrogen consumed in the fuel cell to be decreased and causes the flow rate of hydrogen introduced into the combusting section to be increased. Decreasing the sweep current also causes the flow rate of oxygen consumed in the fuel cell to be decreased. However, the flow rate of the oxidant gas is decreased by the flow rate of the oxidant gas which occurs following a decrease in the sweep current, and thus the flow rate of oxygen which is fed to the combusting section is not increased. Accordingly, it is possible to reliably increase the flow rate of the combustible component which is fed to the combusting section and to decrease the oxygen proportion of the gas introduced into the combusting section so as to become the determination oxygen proportion, without increasing the flow rate of oxygen which is fed to the combusting section. For this reason, it is possible to reliably cause incomplete combustion to occur in the combusting section, and to reliably introduce the combustible component which is not combusted in the combusting section, into the catalytic combustor. Accordingly, it is possible to reliably determine degradation of the catalytic reaction in the catalytic combustor.

A fourth aspect of this disclosure is directed to the second aspect of this disclosure, wherein the fuel cell system further includes an instruction fuel flow rate computing section that computes an instruction fuel flow rate which is a flow rate of the fuel and is for decreasing the oxygen proportion so as to become the determination oxygen proportion, based on a sweep current which is a current drawn from the fuel cell, and a flow rate of the oxidant gas fed to the fuel cell, and the oxygen proportion changing section controls the fuel feeding section to cause the flow rate of the fuel fed by the fuel feeding section to become the instruction fuel flow rate. In this manner, the instruction fuel flow rate for decreasing the oxygen proportion so as to become the determination oxygen proportion is computed and the fuel feeding section is controlled to cause the flow rate of the fuel fed by the fuel feeding section to become the instruction fuel flow rate. Thus, it is possible to cause the oxygen proportion of the gas fed to the combusting section to become the determination oxygen proportion with high accuracy and high reliability. For this reason, it is possible to reliably cause incomplete combustion to occur in the combusting section, and to even more reliably introduce the combustible component which is not combusted in the combusting section, into the catalytic combustor. Accordingly, it is possible to even more reliably determine degradation of the catalytic reaction in the catalytic combustor.

A fifth aspect of this disclosure is directed to the third aspect of this disclosure, wherein the fuel cell system further includes an instruction current computing section that computes an instruction current which is a current drawn from the fuel cell and is for decreasing the oxygen proportion so as to become the determination oxygen proportion, based on the flow rate of the fuel fed by the fuel feeding section; and an oxidant gas instruction flow rate computing section that computes an oxidant gas instruction flow rate which is a flow rate of the oxidant gas and is for decreasing the oxygen proportion so as to become the determination oxygen proportion, based on the flow rate of the fuel fed by the fuel feeding section, and the instruction current computed by the instruction current computing section, and the oxygen proportion changing section controls the sweep current changing section to cause the sweep current drawn from the fuel cell to become the instruction current, and controls the oxidant gas feeding section to cause the flow rate of the oxidant gas fed to the fuel cell to become the oxidant gas instruction flow rate. In this manner, the instruction current for causing the oxygen proportion to become the determination oxygen proportion is computed and the sweep current drawn from the fuel cell is changed to the instruction current. The oxidant gas instruction flow rate for causing the oxygen proportion to become the determination oxygen proportion is computed and the flow rate of the oxidant gas fed by the oxidant gas feeding section is changed to the oxidant gas instruction flow rate. Thus, it is possible to cause the oxygen proportion of the gas fed to the combusting section to become the determination oxygen proportion with high accuracy and high reliability. For this reason, it is possible to reliably cause incomplete combustion to occur in the combusting section, and to even more reliably introduce the combustible component which is not combusted in the combusting section, into the catalytic combustor. Accordingly, it is possible to even more reliably determine degradation of the catalytic reaction in the catalytic combustor.

A sixth aspect of this disclosure is directed to the fourth aspect of this disclosure, wherein the fuel cell system further includes a reforming-section temperature detecting section that detects a temperature of the reforming section, and the instruction fuel flow rate computing section computes the instruction fuel flow rate based on the temperature of the reforming section which is detected by the reforming-section temperature detecting section. With this configuration, the instruction fuel flow rate computing section may compute a composition of the fuel which is generated by the reforming section, based on the temperature of the reforming section. The instruction fuel flow rate computing section computes the instruction fuel flow rate based on the computed composition of the fuel. Thus, the instruction fuel flow rate for causing the oxygen proportion of the gas fed to the combusting section to become the determination oxygen proportion is computed with even higher accuracy, compared to a case where computation based on the composition of the fuel is not performed. For this reason, it is possible to even more reliably cause the oxygen proportion of the gas fed to the combusting section to become the determination oxygen proportion, to even more reliably cause incomplete combustion to occur in the combusting section, and to even more reliably introduce the combustible component which is not combusted in the combusting section, into the catalytic combustor. Accordingly, it is possible to even more reliably determine degradation of the catalytic reaction in the catalytic combustor.

A seventh aspect of this disclosure is directed to the fifth aspect of this disclosure, wherein the fuel cell system further includes a reforming-section temperature detecting section that detects a temperature of the reforming section, and the instruction current computing section computes the instruction current based on the temperature of the reforming section which is detected by the reforming-section temperature detecting section. With this configuration, the composition of the fuel which is generated by the reforming section may be computed based on the temperature of the reforming section. The instruction current computing section computes the instruction current based on the computed composition of the fuel. Thus, the instruction fuel flow rate for causing the oxygen proportion of the gas fed to the combusting section to become the determination oxygen proportion is computed with even higher accuracy, compared to a case where computation based on the composition of the fuel is not performed. For this reason, it is possible to even more reliably cause the oxygen proportion of the gas fed to the combusting section to become the determination oxygen proportion, to even more reliably cause incomplete combustion to occur in the combusting section, and to even more reliably introduce the combustible component which is not combusted in the combusting section, into the catalytic combustor. Accordingly, it is possible to even more reliably determine degradation of the catalytic reaction in the catalytic combustor.

An eighth aspect of this disclosure is directed to any one of the first to the seventh aspects of this disclosure, wherein the temperature detecting section detects the temperature of an exhaust gas which is exhausted from the catalytic combustor, or the temperature of the catalytic combustor, and the determining section determines that the catalytic reaction of the catalytic combustor is degraded, if the temperature detected by the temperature detecting section is less than a determination temperature when the oxygen proportion changing section changes the oxygen proportion. With this configuration, when changing of the oxygen proportion causes the flow rate of the combustible component which is introduced into the catalytic combustor and is not combusted, to be increased and the temperature of the exhaust gas, which is detected by the temperature detecting section or the temperature of the catalytic combustor does not reach the determination temperature, it is determined that the catalytic reaction is degraded. In this manner, even though a plurality of temperature detecting sections is not provided, it is possible to determine degradation of the catalytic reaction in the catalytic combustor. For this reason, it is possible to suppress an increase of cost in manufacturing the fuel cell system.

A ninth aspect of this disclosure is directed to any one of the first to the seventh aspects of this disclosure, wherein the temperature detecting section is configured from a first temperature detecting section and a second temperature detecting section, the first temperature detecting section detecting the temperature of an exhaust gas which is exhausted from the catalytic combustor or a temperature of the catalytic combustor, the second temperature detecting section detecting the temperature of the combustion gas introduced into the catalytic combustor, and the determining section determines that the catalytic reaction of the catalytic combustor is degraded, if a temperature difference is lower than a defined temperature difference when the oxygen proportion changing section changes the oxygen proportion, the temperature difference obtained by subtracting the temperature detected by the second temperature detecting section from the temperature detected by the first temperature detecting section. In this manner, it is determined whether or not the catalytic reaction in the catalytic combustor is degraded using the temperature difference which is obtained by subtracting the temperature of the combustion gas introduced into the catalytic combustor from the temperature of the exhaust gas which is exhausted from the catalytic combustor or the temperature of the catalytic combustor. Thus, it is possible to reliably detect an increase of the temperature of the catalytic combustor following an increase in the flow rate of the combustible component which is introduced into the catalytic combustor, regardless of the temperature of the combustion gas. For this reason, it is possible to determine whether or not the catalytic reaction in the catalytic combustor is degraded, with even higher accuracy.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic diagram illustrating an overview of an embodiment (first embodiment) of a fuel cell system disclosed here;

Fig. 2 is a graph illustrating a relationship of an oxygen proportion λ of gas mixture introduced into a combusting section and the temperature T2 of gas exhausted from the catalytic combustor;

Fig. 3 is a diagram illustrating an overview of a method for computing the oxygen proportion λ of the gas mixture introduced into a combusting section;

Fig. 4 is mapping data illustrating a relationship of the temperature of a reforming section and the composition of a reformed gas;

Fig. 5 is a flowchart illustrating "first catalytic reaction degradation determination processing" which is executed by a controller illustrated in Fig. 1;

Fig. 6 is a flowchart illustrating "second catalytic reaction degradation determination processing" which is executed by the controller illustrated in Fig. 1; and

Fig. 7 is a schematic diagram illustrating an overview of a fuel cell system according to a second embodiment.

DETAILED DESCRIPTION

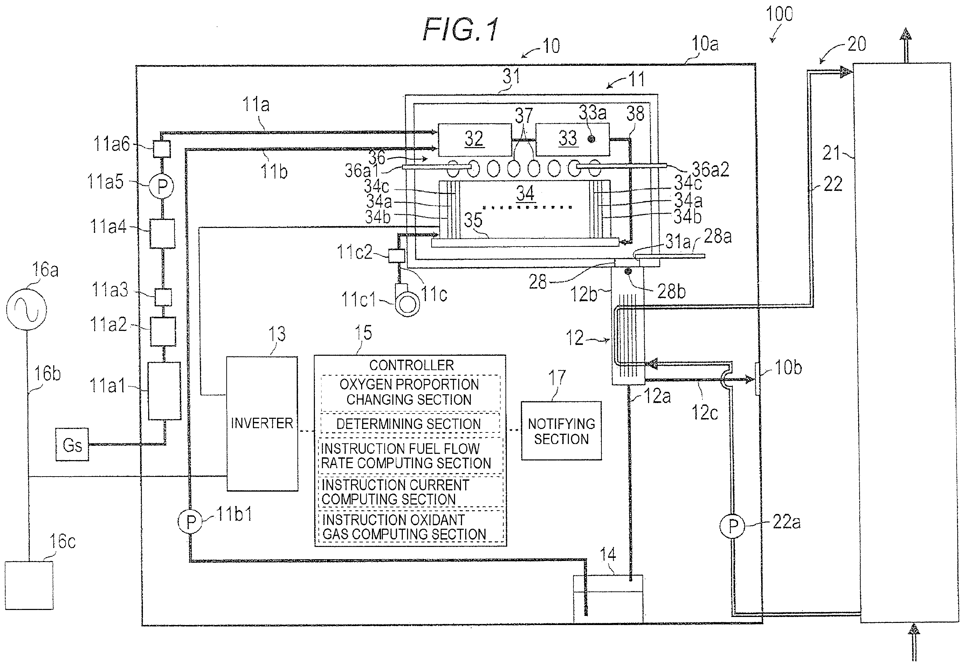

Hereinafter, an embodiment of a fuel cell system 100 disclosed here will be described. As illustrated in Fig. 1, the fuel cell system 100 includes an electricity generation unit 10 and a hot water storage tank 21. The electricity generation unit 10 includes a housing 10a, a fuel cell module 11, a heat exchanger 12, an inverter 13, a water tank 14, a controller 15, and a notifying section 17.

The fuel cell module 11 includes a casing 31, an evaporating section 32, a reforming section 33, and a fuel cell 34. The casing 31 is formed of a heat-insulating material and has a box shape. The evaporating section 32 is heated by a combustion gas which is combusted by a combusting section 36 (will be described later) so as to evaporate water for reforming which is fed thereto and to generate steam and preheats a raw reforming material which is fed thereto. The evaporating section 32 mixes the steam which is generated in this manner with the preheated raw reforming material and feeds mixture to the reforming section 33.

One end of a raw reforming material feed pipe 11a is connected to the evaporating section 32. A feed source Gs is connected to another end of the raw reforming material feed pipe 11a. The feed source Gs is used for feeding a raw reforming material. Examples of the raw reforming material include reforming gas fuel such as natural gas and LP gas or reforming liquid fuel such as kerosene, gasoline, and methanol. The fuel cell system 100 according to this embodiment which is an embodiment of using natural gas as the raw reforming material will be described.

A shut-off valve 11a1, a desulfurizer 11a2, a raw reforming material flow rate sensor 11a3, a buffer tank 11a4, a raw material pump 11a5, and a check valve 11a6 are provided in the raw reforming material feed pipe 11a in order starting upstream. The shut-off valve 11a1 is a valve (double valve) that shuts the raw reforming material feed pipe 11a off openably and closably in accordance with a command from the controller 15. The desulfurizer 11 a2 removes a sulfur component (for example, sulfur compound) from the raw reforming material. The raw reforming material flow rate sensor 11 a3 detects the flow rate of a raw reforming material which is fed to the evaporating section 32, that is, detects an amount of flow per unit of time. The raw reforming material flow rate sensor 11a3 transmits a detection result to the controller 15. The buffer tank 11a4 suppresses accuracy degradation or deviation from a real value of the raw reforming material flow rate sensor 11a3 due to pulsation of the raw material pump 11 a5.

The raw material pump 11 a5 is a feeder for feeding a reformed gas (fuel) to the fuel cell 34 by feeding the raw reforming material to the evaporating section 32. The raw material pump 11a5 adjusts a fuel feed amount (feed flow rate (amount of flow per unit of time)) from the feed source Gs in accordance with a control command value from the controller 15. The check valve 11a6 is arranged between the raw material pump 11a5 and the fuel cell module 11 (evaporating section 32). The check valve 11a6 allows a flow from the raw material pump 11 a5 to the fuel cell module 11, but prohibits a flow in a reverse direction.

One end of a water feed pipe 11b is connected to the evaporating section 32. The water tank 14 is connected to another end of the water feed pipe 11b. Water for reforming pump 11b1 is provided in the water supply pipe 11b. With such a configuration, water for reforming is fed to the evaporating section 32 from the water tank 14.

One end of a cathode air feed pipe 11c is connected to the fuel cell 34. A cathode air blower 11c1 is connected to another end of the cathode air feed pipe 11c. With such a configuration, a cathode air is fed to the fuel cell 34. A cathode air flow rate sensor 11c2 is provided on a downstream side of the cathode air blower 11c1 in the cathode air feed pipe 11c. The cathode air flow rate sensor 11 c2 detects the flow rate of the cathode air which is fed to the fuel cell 34.

The reforming section 33 is heated by the combustion gas which is combusted by the combusting section 36 (will be described later) so as to receive heat necessary for a steam reforming reaction, and thus generates and obtains the reformed gas from a raw material gas (raw reforming material and steam) which is fed from the evaporating section 32. The reforming section 33 is filled with a catalyst (for example, Ru-based catalyst or Ni-based catalyst). The raw material gas is reacted and reformed due to the catalyst and thus a gas containing hydrogen gas and carbon monoxide is generated (so-called steam reforming reaction). That is, in the reforming section 33, reactions expressed by the following Chemical Formulas 1 and 2 occur.

(Formula 1)  $CH_4 + H_2O \rightarrow CO + 3H_2$

(Formula 2)  $H_2O + CO \Leftrightarrow H_2 + CO_2$

The reformed gas which is generated in this manner contains hydrogen, carbon monoxide, carbon dioxide, steam, unreformed natural gas (methane gas), and water for reforming (steam) which is not used in reforming. In this manner, the reforming section 33 generates the reformed gas (fuel) from the raw reforming material and the water for reforming and feeds the generated reformed gas to the fuel cell 34. The steam reforming reaction is an endothermic reaction.

A reforming section temperature sensor 33a is provided in the reforming section 33. The reforming section temperature sensor 33a detects the temperature T1 of the reforming section 33 (temperature of the catalyst). A detection result (output signal) of the reforming section temperature sensor 33a is transmitted to the controller 15.

In the fuel cell 34, electricity is generated using the reformed gas (fuel) which is generated by the reforming section 33, and the cathode air (oxidant gas) which is fed by the cathode air blower 11c1. The fuel cell 34 is configured in such a manner that a plurality of cells 34a are stacked and the cell includes a fuel electrode, an air electrode (oxidant electrode), and an electrolyte which is disposed between both of the electrodes. The fuel cell 34 according to this embodiment is a solid oxide fuel cell and uses zirconium oxide which is one type of solid oxide, as the electrolyte. Hydrogen, carbon monoxide, methane gas, and the like are fed to the fuel electrode of the fuel cell 34, as the fuel.

In the fuel electrode, reactions expressed by the following Chemical Formulas 3 and 4 occur.

(Formula 3)  $H_2 + O^{2-} \rightarrow H_2O + 2e^-$

(Formula 4)  $CO + O^{2-} \rightarrow CO_2 + 2e^-$

In the air electrode, a reaction expressed by the following Chemical Formula 5 occurs.

(Formula 5)  $1/2O_2 + 2e^- \rightarrow O_2^-$

That is, oxide ions ($O^{2-}$) which are generated in the air electrode pass through the electrolyte and the oxide ions react with hydrogen in the fuel electrode, and thereby electric energy is generated.

An operation temperature of the fuel cell 34 may be in a range of substantially 400°C to 1000°C. Natural gas, coal gas, or the like may be directly used as the fuel therein in addition to hydrogen.

A fuel flow path 34b in which the reformed gas (fuel) flows is formed on the fuel electrode side of the cell 34a. An air flow path 34c in which the air (cathode air) (oxidant gas) flows is formed on the air electrode side of the cell 34a.

The fuel cell 34 is provided on a manifold 35. The reformed gas is fed to the manifold 35 from the reforming section 33 through a reformed gas feed pipe 38. The fuel flow path 34b has a lower end (one end) which is connected to a fuel outlet of the manifold 35, and the reformed gas output from the fuel outlet is introduced from the lower end and is output from an upper end. The cathode air which is delivered by the cathode air blower 11c1 is fed through the cathode air feed pipe 11c, and is introduced from a lower end of the air flow path 34c and is output from an upper end thereof.

The combusting section 36 is provided between the fuel cell 34, and the evaporating section 32 and the reforming section 33. The combusting section 36 combusts an anode off gas (fuel off gas) containing the combustible component which is exhausted from the fuel cell 34 with a cathode off gas (oxidant off gas) which is exhausted from the fuel cell 34, and heats the evaporating section 32 and the reforming section 33 using the combustion gas which is generated after combustion.

In the combusting section 36, flame 37 is generated by combusting the anode off gas. A pair of ignition heaters 36a1 and 36a2 which are used for igniting the anode off gas is provided in the combusting section 36.

The heat exchanger 12 is a device to which an exhaust gas which is exhausted from the fuel cell module 11 and hot water from the hot water storage tank 21 are supplied and in which heat exchange is performed between the exhaust gas and the hot water. The hot water storage tank 21 stores the hot water and a hot water circulation line 22 in which the hot water which is circulated (circulated in a direction indicated by arrows in Fig. 1) is sent to the hot water storage tank 21. A circulation pump 22a and the heat exchanger 12 are arranged on the hot water circulation line 22 in an order from a lower end of the hot water storage tank 21 to an upper end. A condensed water feed pipe 12a which is connected to the water tank 14 is connected to the heat exchanger 12.

In the heat exchanger 12, the exhaust gas from the fuel cell module 11 passes in an exhaust gas introduction portion 12b and then is introduced into the heat exchanger 12. The exhaust gas is cooled by performing heat exchange with the hot water, and condensed water is obtained by condensing steam contained in the exhaust gas. The exhaust gas subjected to heat exchange passes in an exhaust pipe 12c and passes in a first exhaust port 10b which is provided in the housing 10a, and then is discharged to the outside of the housing 10a. The condensed water passes in the condensed water feed pipe 12a and then is supplied to the water tank 14. The water tank 14 causes the condensed water to become pure water using ion exchange resin.

The heat exchanger 12, the hot water storage tank 21, and the hot water circulation line 22 which are described above, constitute a waste heat recovery system 20. The waste heat recovery system 20 collects and stores waste heat of the fuel cell module 11 in the hot water.

A catalytic combustor 28 is provided in an outlet 31 a of the casing 31. The outlet 31 a of the casing 31 corresponds to a portion at which an inlet of the exhaust gas introduction portion 12b in the heat exchanger 12 is connected to the casing 31. The combustion gas which is exhausted from the combusting section 36 is introduced into the catalytic combustor 28. The catalytic combustor 28 combusts a combustible component (for example, hydrogen, methane gas, carbon monoxide, and the like) which is contained in the combustion gas and is not combusted in the combusting section 36, through a catalytic reaction. The catalytic combustor 28 contains a material obtained by containing precious metal such as platinum and palladium in a simple substance of ceramic, and the like. The catalytic combustor 28 performs combustion on the combustible component of hydrogen, methane gas, carbon monoxide, and the like through the catalytic reaction instead of flaming combustion. Thus, it is possible to have a high combustion speed and to suppress discharge of a not-combusted gas and achieve high combustion efficiency.

A catalytic combustor heater 28a is provided in the catalytic combustor 28. The catalytic combustor heater 28a heats the catalytic combustor up to an activation temperature of a catalyst and combusts the combustible component. The catalytic combustor heater 28a is heated in accordance with an instruction of the controller 15 and is used for increasing the temperature of the catalytic combustor 28 up to the activation temperature before the system starts. A temperature sensor 28b (temperature detecting section) for detecting the temperature T2 of the exhaust gas which is exhausted from the catalytic combustor 28 is provided at a position on a direct downstream side in the catalytic combustor 28. A detection result (output signal) of the temperature sensor 28b is transmitted to the controller 15.

The inverter 13 draws a current which is generated in the fuel cell 34. This current is referred to as a sweep current (drawn current) below. The inverter 13 converts the sweep current which is a drawn direct current into an alternating current and outputs the alternating current to a power line 16b which is connected to an AC system power supply 16a and an external power load 16c (for example, an electric appliance). The inverter 13 may detect a current value of the sweep current and may cause the amount of the sweep current to increase or decrease. An alternating current from the system power supply 16a is input to the inverter 13 through the power line 16b. The inverter 13 converts the input alternating current into a direct current having a predetermined value, and outputs the direct current to auxiliary machines (pumps, blower, and the like) or the controller 15.

The controller 15 performs overall control of the fuel cell system 100. The controller 15 drives the auxiliary machines and controls an operation of the fuel cell system 100. The controller 15 performs feedback control on the flow rate of the raw reforming material which is fed to the evaporating section 32 by the raw material pump 11a5, based on the flow rate of the raw reforming material to the evaporating section 32, which is detected by the raw reforming material flow rate sensor 11a3. The controller 15 performs feedback control on the flow rate of the cathode air which is fed to the fuel cell 34 by the cathode air blower 11c1, based on the flow rate of the cathode air to the fuel cell 34, which is detected by the cathode air flow rate sensor 11c2. The controller 15 performs linear current control so as to adjust an amount of a current which is supplied to a motor (not illustrated) for driving the raw material pump 11a5 or a motor (not illustrated) for driving the cathode air blower 11c1. Here, the linear current control includes PWM control which causes an effective current to be changed and reduced by causing a duty ratio of a voltage for driving the raw material pump 11a5 to be changed.

The controller 15 adjusts the flow rate of the raw reforming material which is fed to the evaporating section 32 by the raw material pump 11a5, adjusts the flow rate of the water for reforming which is supplied to the evaporating section 32 by the water for reforming pump 11b1, and adjusts the flow rate of the cathode air which is fed to the fuel cell 34 by the cathode air blower 11c1. Thus, the controller 15 adjusts power which is generated in the fuel cell 34, adjusts the quantity of heat which is generated in the combusting section 36, and adjusts the quantity of heat which is supplied to the evaporating section 32 and the reforming section.

Description of Catalytic Reaction Degradation Determining Method

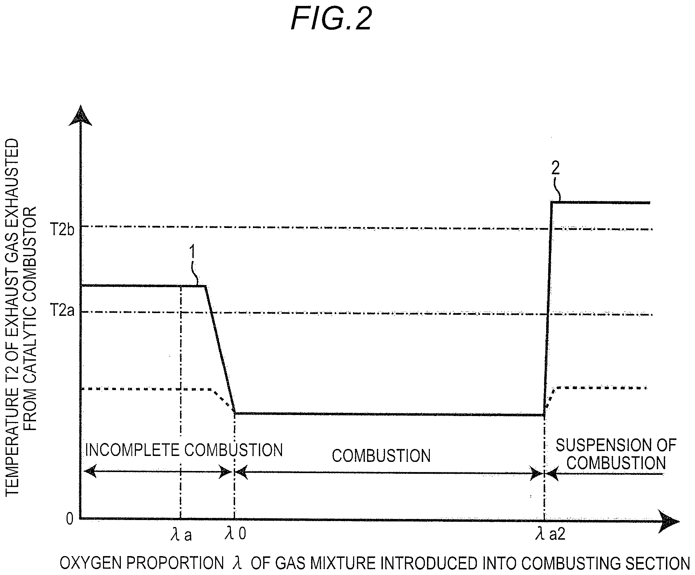

A method for determining whether or not the catalytic reaction in the catalytic combustor 28 is degraded will be described below using a graph illustrated in Fig. 2. Fig. 2 is the graph illustrating a relationship of an oxygen proportion λ of gas mixture and the temperature T2 of the exhaust gas which is exhausted from the catalytic combustor 28. The gas mixture is a substance obtained by mixing the anode off gas introduced into the combusting section 36 and the cathode off gas.

In Fig. 2, the oxygen proportion λ has a value represented by the following Expression (1).

$$\lambda = A/B \quad (1)$$

where, $\lambda$ refers to an oxygen proportion, A refers to the flow rate of oxygen which is actually introduced into the combusting section 36, and B refers to an ideal oxygen flow rate necessary for causing the combustible component contained in the anode off gas to be subjected to complete combustion.

If the oxygen proportion $\lambda$ of the gas mixture introduced into the combusting section 36 is lower than an incomplete combustion start oxygen proportion $\lambda 0$ (for example, 1.2) which causes incomplete combustion of the gas mixture in the combusting section 36 to start, the anode off gas is subjected to incomplete combustion in the combusting section 36. If incomplete combustion occurs, the flow rate of the combustible component contained in the combustion gas which is exhausted from the combusting section 36 and then is introduced into the catalytic combustor 28 is increased. Since the combustible component contained in the combustion gas introduced into the catalytic combustor 28 is combusted in the catalytic combustor 28, the temperature T2 of the exhaust gas which is exhausted from the catalytic combustor 28 increases compared to a case where the oxygen proportion $\lambda$ of the gas mixture introduced into the combusting section 36 is higher than the incomplete combustion start oxygen proportion $\lambda 0$, as illustrated in (1) of Fig. 2.

When the oxygen proportion $\lambda$ of the gas mixture introduced into the combusting section 36 is higher than the incomplete combustion start oxygen proportion $\lambda 0$, most of the anode off gas is combusted in the combusting section 36. If most of the anode off gas is combusted, the flow rate of the combustible component introduced into the catalytic combustor 28 is reduced compared to a case where the oxygen proportion $\lambda$ of the gas mixture introduced into the combusting section 36 is lower than the incomplete combustion start oxygen proportion $\lambda 0$. Further, the quantity of heat obtained by combusting the combustible component in the catalytic combustor 28 becomes lower and the temperature T2 of the exhaust gas which is exhausted from the catalytic combustor 28 becomes lower.

In embodiments disclosed herein, using such characteristics illustrated in Fig. 2, the oxygen proportion $\lambda$ of the gas mixture introduced into the combusting section 36 is decreased so as to become a determination oxygen proportion $\lambda a$ which is lower than the incomplete combustion start oxygen proportion $\lambda 0$ and the flow rate of the combustible component which is contained in the combustion gas and is introduced into the catalytic combustor 28 is increased. Whether or not the temperature of the catalytic combustor 28 increases so as to become higher than the determination temperature T2a causes determination of whether or not the catalytic reaction in the catalytic combustor 28 is degraded. That is, when the catalytic reaction in the catalytic combustor 28 is degraded, since the combustible component is not completely combusted through the catalytic reaction in the catalytic combustor 28 even though the flow rate of the combustible component contained in the combustion gas which is introduced into the catalytic combustor 28 increases, the temperature T2 of the exhaust gas which is exhausted from the catalytic combustor 28 does not increase compared to a case where the catalytic reaction in the catalytic combustor 28 is not degraded. Using this principle, even though the oxygen proportion $\lambda$ of the gas mixture introduced into the combusting section 36 is decreased so as to become the determination oxygen proportion $\lambda a$ which is lower than the incomplete combustion start oxygen proportion $\lambda 0$, if the temperature of the catalytic combustor 28 does not increase so as to be equal to or higher than the determination temperature T2a, it is determined that the catalytic reaction in the catalytic combustor 28 is degraded.

Method of Computing Oxygen Proportion $\lambda$

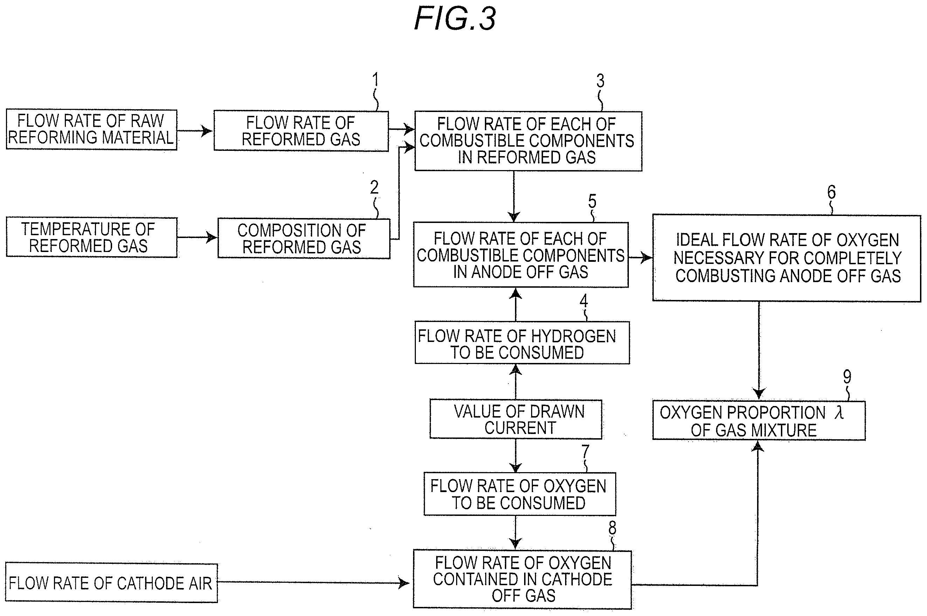

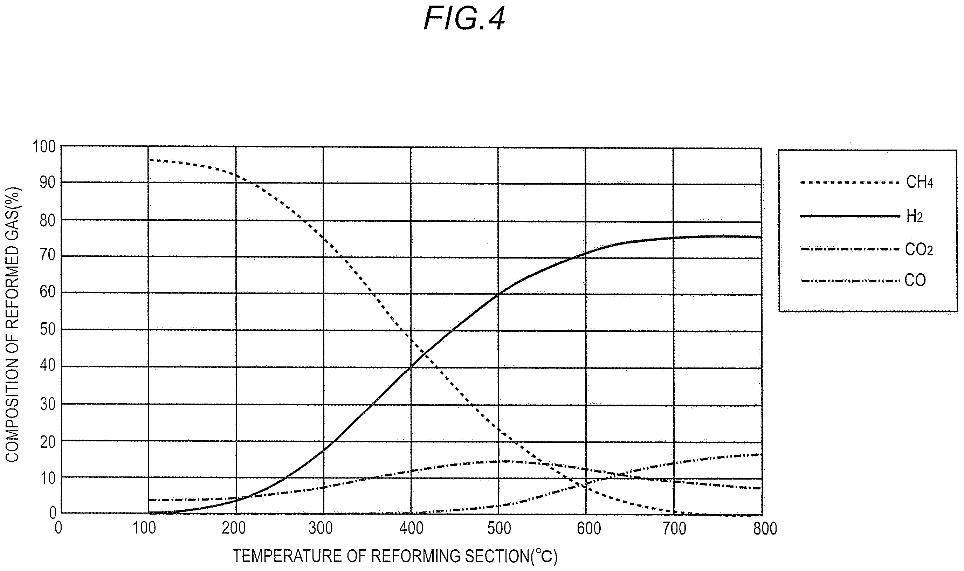

Next, a method of computing the oxygen proportion $\lambda$ of the gas mixture which is introduced into the combusting section 36 will be described with reference to Figs. 3 and 4.

(1) The flow rate of the reformed gas which flows out from the reforming section 33 is computed based on the flow rate of the raw reforming material which is detected by the raw reforming material flow rate sensor 11a3.

(2) A composition of the reformed gas is computed based on the temperature of the reforming section 33 which is detected by the reforming-section temperature sensor 33a, with reference to mapping data illustrated in Fig. 4. As illustrated in Fig. 4, a proportion of methane ($CH_4$) contained in the reformed gas is decreased following an increase in the temperature of the reforming section 33. A proportion of hydrogen ($H_2$) contained in the reformed gas is increased following an increase in the temperature of the reforming section 33. Following an increase in the temperature of the reforming section 33, a proportion of carbon monoxide (CO) contained in the reformed gas is increased, but is equal to or lower than the proportion of hydrogen.

(3) The flow rate of each of combustible components of the reformed gas which is fed to the fuel cell 34 from the reforming section 33 is computed based on the flow rate of the reformed gas which is computed in (1), and the composition of the reformed gas which is computed in (2).

(4) The flow rate of hydrogen consumed in the fuel cell 34 is computed based on the sweep current which is drawn from the fuel cell 34.

(5) The flow rate of each of combustible components of the anode off gas which is fed to the combusting section 36 from the fuel cell 34 is computed based on the flow rate of each of the combustible components of the reformed gas which is fed to the fuel cell 34, which is computed in (3), and the flow rate of hydrogen consumed in the fuel cell 34 which is computed in (4). That is, the flow rate of hydrogen contained in the anode off gas is computed by subtracting the flow rate of hydrogen consumed in the fuel cell 34 from the flow rate of hydrogen contained in the reformed gas. Then, the flow rate of each of combustible components other than hydrogen among the combustible components of the reformed gas is computed as the flow rate of each of the combustible components other than hydrogen among the combustible components of the anode off gas.

(6) An ideal oxygen volume which is necessary for causing the anode off gas fed to the combusting section 36 to be completely combusted is computed based on the flow rate of each of the combustible components of the anode off gas, which is computed in (5).

(7) The flow rate of oxygen consumed in the fuel cell 34 is computed based on the sweep current which is drawn from the fuel cell 34.

(8) The flow rate of oxygen contained in the cathode off gas which is fed to the combusting section 36 from the fuel cell 34 is computed based on the flow rate of the cathode air which is detected by the cathode air flow rate sensor 11c2, and the flow rate of oxygen consumed in the fuel cell 34, which is computed in (7). That is, the flow rate of oxygen contained in the cathode off gas is computed by subtracting the flow rate of oxygen consumed in the fuel cell 34 from the flow rate of oxygen contained in the cathode air.

(9) The oxygen proportion $\lambda$ of the gas mixture introduced into the combusting section 36 is computed by dividing the flow rate of oxygen contained in the cathode off gas, which is computed in (8), by the ideal oxygen volume which is necessary for causing the anode off gas to be completely combusted and is computed in (6).

A specific method of determining degradation of the catalytic reaction in the catalytic combustor 28 will be described below.

First Catalytic Reaction Degradation Determination Processing

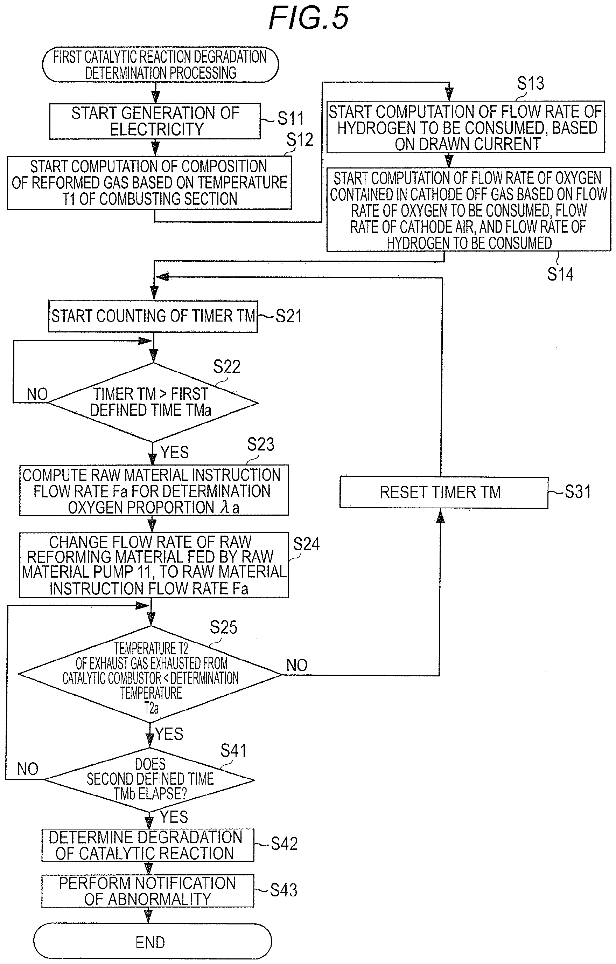

A "first catalytic reaction degradation determination processing" will be described below using a flowchart illustrated in Fig. 5.

The "first catalytic reaction degradation determination processing" is a method in which the flow rate of the raw reforming material which is fed to the evaporating section 32 is increased in a state where the sweep current which is drawn from the fuel cell 34 and the flow rate of the cathode air which is fed to the fuel cell 34 are held, that is, the oxygen proportion $\lambda$ of the gas mixture fed to the combusting section 36 is set as the determination oxygen proportion $\lambda a$ by increasing the flow rate of the reformed gas fed to the fuel cell 34, and it is determined whether or not the catalytic reaction in the catalytic combustor 28 is degraded. If an operation of the fuel cell system starts, the controller 15 causes a program to proceed to Step S11.

In Step S11, the controller 15 controls the raw material pump 11a5, the cathode air blower 11c1, and the water for reforming pump 11b1, and thereby electricity in the fuel cell 34 starts to be generated. If a process of Step S11 is ended, the controller 15 causes a program to proceed to Step S12.

In Step S12, the controller 15 (instruction fuel flow rate computing section) starts computation of the composition of the reformed gas which is fed to the fuel cell 34 from the reforming section 33, with reference to the mapping data illustrated in Fig. 4 based on the temperature of the reforming section 33 which is detected by the reforming-section temperature sensor 33a (2 of Fig. 3). If a process of Step S12 is ended, the controller 15 causes a program to proceed to Step S13.

In Step S13, the controller 15 (instruction fuel flow rate computing section) starts computation of the flow rate of hydrogen which is consumed in the fuel cell 34, based on the sweep current which is drawn from the fuel cell 34 by the inverter 13 (4 of Fig. 4). If a process of Step S13 is ended, the controller 15 causes a program to proceed to Step S14.

In Step S14, the controller 15 (instruction fuel flow rate computing section) starts computation of the flow rate of oxygen which is consumed in the fuel cell 34, based on the sweep current which is drawn from the fuel cell 34 by the inverter 13 (7 of Fig. 3). Then, the controller 15 (instruction fuel flow rate computing section) starts computation of flow rate of oxygen contained in the cathode off gas which is fed to the combusting section 36 from the fuel cell 34, based on the flow rate of the cathode air which is detected by the cathode air flow rate sensor 11 c2, and the flow rate of oxygen which is consumed in the fuel cell 34 (8 of Fig. 3). If a process of Step S14 is ended, the controller 15 causes a program to proceed to Step S21.

In Step S21, the controller 15 starts the timer TM to perform counting. If a process of Step S21 is ended, the controller 15 causes a program to proceed to Step S22.

In Step S22, the controller 15 causes a program to proceed to Step S23 when the controller 15 determines that a defined time TMa (for example, one day) in the timer TM elapses (YES in Step S22). When the controller 15 determines that the defined time TMa in the timer TM does not elapse (NO in Step S22), the controller 15 repeats a process of Step S22.

In Step S23, the controller 15 (instruction fuel flow rate computing section) computes a raw material instruction flow rate Fa for causing the oxygen proportion to become the determination oxygen proportion λa, based on the composition of the reformed gas on which computation is started in Step S12, the flow rate of hydrogen consumed in the fuel cell 34, on which computation is started in Step S13, and the flow rate of oxygen contained in the cathode off gas, which is computed in the Step S14 using the above-described method with reference to Fig. 3. The determination oxygen proportion λa is the oxygen proportion of the gas mixture introduced into the combusting section 36 when it is determined whether or not the catalytic reaction in the catalytic combustor 28 is degraded. The determination oxygen proportion λa is a value for causing the temperature T2 of the exhaust gas which is exhausted from the catalytic combustor 28 to become a determination temperature T2a if the oxygen proportion λ of the gas mixture introduced into the combusting section 36 becomes the determination oxygen proportion λa when the catalytic reaction in the catalytic combustor 28 is not degraded. Preferably, the determination oxygen proportion λa is equal to or more than 1. This is because soot is generated due to incomplete combustion of the combustible component in the combusting section 36 when the oxygen proportion λ of the gas mixture introduced into the combusting section 36 becomes the determination oxygen proportion λa which is lower than 1, the soot may close a flow passage on a downstream side of the combusting section 36. The raw material instruction flow rate Fa is the flow rate of the raw reforming material which is fed by the raw material pump 11a5 so as to become the determination oxygen proportion λa in a state where the sweep current which is drawn from the fuel cell 34 and the flow rate of the cathode air which is fed to the fuel cell 34 are held. If a process of Step S23 is ended, the controller 15 causes the program to proceed to Step S24.

In Step S24, the controller 15 (oxygen proportion changing section) performs feedback control on the raw material pump 11a5 based on the flow rate of the raw reforming material which is detected by the raw reforming material flow rate sensor 11a3, such that the flow rate of the raw reforming material fed by the raw material pump 11 a5 becomes the raw material instruction flow rate Fa computed in Step S23. Due to this control, the flow rate of the raw reforming material fed by the raw material pump 11a5 increases compared to before Step S24 is executed. The controller 15 (oxygen proportion changing section) controls the raw material pump 11a5 such that the flow rate of the raw reforming material fed by the raw material pump 11a5 gradually increases so as to become the raw material instruction flow rate Fa after a predetermined time (for example, tens of seconds). Thus, occurrence of partial blow-off or occurrence of complete blow-off in the combusting section 36 due to rapidly increasing the flow rate of the raw reforming material is prevented. The partial blow-off means that a portion of a flame is blown out and the complete blow-off means that the entirety of flame is blown out. Through a process of Step S24, the oxygen proportion λ of the gas mixture introduced into the combusting section 36 gradually becomes the determination oxygen proportion λa. The controller 15 increases the flow rate of the water for reforming which is supplied to the evaporating section 32 by the water for reforming pump 11 b1 by a predetermined flow rate, compared to before the process of Step S24 starts. Thus, occurrence of caulking in the reforming section 33 due to increasing of the flow rate of the raw reforming material which is fed to the evaporating section 32 is prevented. If a process of Step S24 is ended, the controller 15 causes the program to proceed to Step S25.

In Step S25, when the controller 15 determines that regarding the temperature T2 of the exhaust gas detected by the temperature sensor 28b, the temperature T2 of the exhaust gas which is exhausted from the catalytic combustor 28 is lower than the determination temperature T2a (YES in Step S25), the controller 15 (determining section) causes the program to proceed to Step S41. When the controller 15 determines that regarding the temperature T2 of the exhaust gas detected by the temperature sensor 28b, the temperature T2 of the exhaust gas which is exhausted from the catalytic combustor 28 is equal to or higher than the determination temperature T2a (NO in Step S25), the controller 15 (determining section) causes the program to proceed to Step S31. When the catalytic reaction in the catalytic combustor 28 is not degraded, if the oxygen proportion λ of the gas mixture introduced into the combusting section 36 becomes the determination oxygen proportion λa, the temperature T2 of the exhaust gas which is exhausted from the catalytic combustor 28 becomes equal to or higher than the determination temperature T2a and determination of NO in Step S25 is performed, as indicated by a solid line in Fig. 2. When the catalytic reaction in the catalytic combustor 28 is degraded, even though the oxygen proportion λ of the gas mixture introduced into the combusting section 36 becomes the determination oxygen proportion λa, the temperature T2 of the exhaust gas which is exhausted from the catalytic combustor 28 becomes lower than the determination temperature T2a and it is determined to be YES in Step S25, as indicated by a broken line in Fig. 2.

In Step S31, the controller 15 resets the timer TM and causes the program to proceed to Step S21.

In Step S41, when the controller 15 determines that a second defined time TMb (for example, several seconds to tens of seconds) elapses after it is determined to be YES in Step S25 for the first time (YES in Step S41), the controller 15 (determining section) causes the program to proceed to Step S42. When the controller 15 determines that the second defined time TMb does not elapse after it is determined to be YES in Step S25 for the first time (NO in Step S41), the controller 15 (determining section) causes the program to return to Step S25.

In Step S42, the controller 15 (determining section) determines that the catalytic reaction in the catalytic combustor 28 is degraded, and causes the program to proceed to Step S43.

In Step S43, the controller 15 controls the notifying section 17 to perform notification of an abnormality indicating that the catalytic reaction in the catalytic combustor 28 is degraded. If a process of Step S43 is ended, the "first catalytic reaction degradation determination processing" is ended.

Advantages of This Embodiment

As apparent from the above descriptions, when the flow rate of the combustible component which is introduced into the catalytic combustor 28 and is not combusted is increased, if the catalytic reaction in the catalytic combustor 28 is not degraded, the combustible component is completely combusted in the catalytic combustor 28 and the temperature of the catalytic combustor 28 increases compared to before the flow rate of the combustible component is increased. Regardless of whether or not the flow rate of the combustible component which is introduced into the catalytic combustor 28 and is not combusted is increased, compared to before the flow rate of the combustible component is increased, when the temperature of the catalytic combustor 28 does not increase, or when the temperature of the catalytic combustor 28 hardly increases, a state in which the combustible component is not combusted in the catalytic combustor 28 or the combustible component is incompletely combusted in the catalytic combustor 28 occurs due to degradation of the catalytic reaction in the catalytic combustor 28. Using such a principle, when the flow rate of the combustible component which is introduced into the catalytic combustor 28 from the combusting section 36 and is not combusted is increased (Step S24 in Fig. 5), the controller 15 (determining section) may determine whether or not the catalytic reaction in the catalytic combustor 28 is degraded, based on the temperature T2 of the exhaust gas which is exhausted from the catalytic combustor 28 regarding the temperature T2 detected by the temperature sensor 28b (Step S25, Step S41, and Step S42). Accordingly, in the fuel cell system 100 including the catalytic combustor 28, it is possible to detect degradation of the catalytic reaction in the catalytic combustor 28.

In this manner, it is determined whether or not the catalytic reaction in the catalytic combustor 28 is degraded, based on the temperature T2 of the exhaust gas which is detected by the temperature sensor 28b (the exhaust gas is exhausted from the catalytic combustor 28). Thus, even though a sensor for detecting hydrogen or carbon monoxide contained in the exhaust gas which is exhausted from the catalytic combustor 28 is not provided in the fuel cell system 100, it is possible to detect degradation of the catalytic reaction in the catalytic combustor 28 by providing only the temperature sensor 28b. For this reason, it is possible to suppress an increase of cost in manufacturing the fuel cell system.

In operating the fuel cell system 100, the flow rate of the combustible component which is introduced into the catalytic combustor 28 from the combusting section 36 and is not combusted is increased, and it is determined whether or not the catalytic reaction in the catalytic combustor 28 is degraded, based on the temperature of the exhaust gas which is exhausted from the catalytic combustor 28. For this reason, even though the fuel cell system 100 is not suspended, it is possible to determine whether or not the catalytic reaction in the catalytic combustor 28 is degraded while generation of electricity in the fuel cell system 100 and generation of hot water continue.

The controller 15 (oxygen proportion changing section) decreases the oxygen proportion $\lambda$ of the gas mixture introduced into the combusting section 36 so as to become the determination oxygen proportion $\lambda a$ which is lower than the incomplete combustion start oxygen proportion $\lambda 0$ for causing incomplete combustion of the combustible component to occur in the combusting section 36 (Step S24 in Fig. 5). Thus, incomplete combustion occurs in the combusting section 36 and it is possible to reliably introduce the combustible component which is not combusted in the combusting section 36, into the catalytic combustor 28. For this reason, it is possible to reliably determine degradation of the catalytic reaction in the catalytic combustor 28.

The controller 15 (oxygen proportion changing section) increases the flow rate of the raw reforming material (fuel) which is fed by the raw material pump 11a5 (fuel feeding section), compared to before the oxygen proportion $\lambda$ of the gas mixture introduced into the combusting section 36 becomes the determination oxygen proportion $\lambda a$ and the controller 15 causes the oxygen proportion $\lambda$ of the gas mixture introduced into the combusting section 36 to become the determination oxygen proportion $\lambda a$ (Step S24 in Fig. 5). Thus, it is possible to reliably increase the flow rate of the combustible component which is fed to the combusting section 36, and to cause the oxygen proportion $\lambda$ of the gas mixture introduced into the combusting section 36 to become the determination oxygen proportion $\lambda a$. For this reason, it is possible to cause incomplete combustion to occur in the combusting section 36, and to reliably introduce the combustible component which is not combusted in the combusting section 36, into the catalytic combustor 28. Accordingly, it is possible to reliably determine degradation of a catalytic reaction in the catalytic combustor 28. When the oxygen proportion $\lambda$ is decreased, since the fed amount of the raw reforming material is increased instead of reducing of the fed amount of the oxidant gas, it is possible to prevent suspension of the fuel cell system 100 due to insufficiency of oxygen in the fuel cell 34 and the like. Further, it is possible to determine degradation of catalytic reaction in the catalytic combustor 28 while the operation of the fuel cell system 100 continues.

The controller 15 (oxygen proportion changing section) increases the flow rate of the raw reforming material (fuel) which is fed by the raw material pump 11a5 (fuel feeding section) and causes the oxygen proportion $\lambda$ of the gas mixture introduced into the combusting section 36 to become the determination oxygen proportion $\lambda a$ in a state where the sweep current which is drawn from the fuel cell 34 is held constant (Step S24 in Fig. 5). The controller 15 determines whether or not the catalytic reaction in the catalytic combustor 28 is degraded. Thus, since the sweep current which is drawn from the fuel cell 34 is not reduced, a current which is supplied to the external power load 16c is sufficient.

The controller 15 (instruction fuel flow rate computing section) computes the raw material instruction flow rate Fa (instruction fuel flow rate) which is the flow rate of the raw reforming material for causing the oxygen proportion λ of the gas mixture introduced into the combusting section 36 to become the determination oxygen proportion λa, based on the sweep current which is drawn from the fuel cell 34, and the flow rate of the cathode air which is fed to the fuel cell 34 (Step S23 in Fig. 5). The controller 15 (oxygen proportion changing section) controls the raw material pump 11a5 so that the flow rate of the raw reforming material which is fed by the raw material pump 11a5 becomes the raw material instruction flow rate Fa (Step S24 in Fig. 5). Thus, it is possible to cause the oxygen proportion λ of the gas mixture which is fed to the combusting section 36 to become the determination oxygen proportion λa with high accuracy and reliability. For this reason, it is possible to reliably cause incomplete combustion to occur in the combusting section 36, and to even more reliably introduce the combustible component which is not combusted in the combusting section 36, into the catalytic combustor 28. Accordingly, it is possible to even more reliably determine degradation of the catalytic reaction in the catalytic combustor 28.

The controller 15 (instruction fuel flow rate computing section) computes the raw material instruction flow rate Fa based on the temperature T1 of the reforming section 33 which is detected by the reforming-section temperature sensor 33a (reforming-section temperature detecting section) (Step S23 in Fig. 5). That is, the controller 15 (instruction fuel flow rate computing section) computes the composition of the reformed gas which is generated in the reforming section 33, based on the temperature T1 of the reforming section 33 (2 of Fig. 2 and Step S12 in Fig. 5). The controller 15 (instruction fuel flow rate computing section) computes the raw material instruction flow rate Fa based on the computed composition of the reformed gas. Thus, the raw material instruction flow rate Fa for causing the oxygen proportion λ of the gas mixture introduced into the combusting section 36 to become the determination oxygen proportion λa is computed with even higher accuracy, compared to a case where computation based on the composition of the reformed gas is not performed. For this reason, it is possible to even more reliably cause the oxygen proportion λ of the gas mixture fed to the combusting section 36 to become the determination oxygen proportion λa.

In this manner, the oxygen proportion λ of the gas mixture which is fed to the combusting section 36 becomes the determination oxygen proportion λa with high accuracy and reliability. Accordingly, generation of soot in the combusting section 36 due to excessively decreasing the oxygen proportion λ (for example, lower than 1) is prevented.

In this embodiment, the controller 15 (determining section) determines that the catalytic reaction in the catalytic combustor 28 is degraded (Step S42) if a time when the temperature T2 of the exhaust gas which is detected by the single temperature sensor 28b (temperature detecting section) does not reach the determination temperature T2a becomes equal to or longer than the second defined time TMb (determination of YES in Step S26 of Fig. 5) when the oxygen proportion λ of the gas mixture introduced into the combusting section 36 is changed to the determination oxygen proportion λa. In this manner, even though a plurality of temperature sensors 28b is not provided, it is possible to determine degradation of the catalytic reaction in the catalytic combustor 28. For this reason, it is possible to suppress an increase of cost in manufacturing the fuel cell system.

Second Catalytic Reaction Degradation Determination Processing

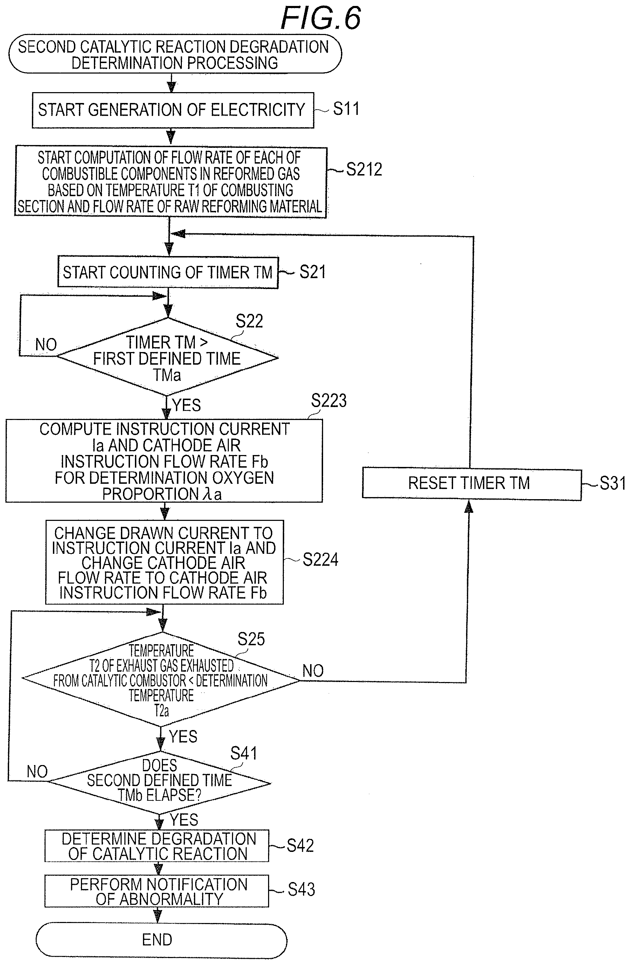

A "second catalytic reaction degradation determination processing" will be described below focusing on differences from the "first catalytic reaction degradation determination processing", using a flowchart illustrated in Fig. 6. Processes in the "second catalytic reaction degradation determination processing" which are the same as those in the "first catalytic reaction degradation determination processing" are denoted by the same Step numbers as those in the "first catalytic reaction degradation determination processing", and descriptions thereof will be omitted. The "second catalytic reaction degradation determination processing" is a method in which the oxygen proportion λ of the gas mixture fed to the combusting section 36 is caused to become the determination oxygen proportion λa by decreasing the sweep current which is drawn from the fuel cell 34 and the flow rate of the cathode air which is fed to the fuel cell 34, in a state where the flow rate of the raw reforming material fed to the evaporating section 32 is held, that is, in a state where the flow rate of the reformed gas fed to the fuel cell 34 is held, and it is determined that the catalytic reaction in the catalytic combustor 28 is degraded.

Instead of Step S12, Step S212 is executed. In Step S212, the controller 15 (instruction current computing section and oxidant gas instruction flow rate computing section) starts computation of the flow rate of the reformed gas which is fed to the fuel cell 34 from the reforming section 33, based on the flow rate of the raw reforming material fed to the evaporating section 32, which is detected by the raw reforming material flow rate sensor 11a3 (1 of Fig. 3). The controller 15 (instruction current computing section and oxidant gas instruction flow rate computing section) starts computation of the composition of the reformed gas which is fed to the fuel cell 34 from the reforming section 33, using a method similar to Step S12 (2 of Fig. 3). Then, the controller 15 (instruction current computing section and oxidant gas instruction flow rate computing section) starts computation of the flow rate of each of the combustible components of the reformed gas which is fed to the fuel cell 34 based on the flow rate and the composition of the reformed gas fed to the fuel cell 34 using the above-described method with reference to Fig. 3 (3 of Fig. 3). If a process of Step S212 is ended, the controller 15 causes the program to proceed to Step S21.

Instead of Step S23, Step S223 is executed. In Step S223, the controller 15 (instruction current computing section and oxidant gas instruction flow rate computing section) computes the instruction current la and a cathode air instruction flow rate Fb based on the flow rate of each of the combustible components of the reformed gas, which is computed in Step S212 using the above-described method with reference to Fig. 3. The instruction current la is the sweep current which is drawn from the fuel cell 34, and causes an oxygen proportion to become the determination oxygen proportion $\lambda$a. If the sweep current becomes the instruction current la which is smaller than a present sweep current value, the flow rate of hydrogen and the flow rate of oxygen which are consumed in the fuel cell 34 are decreased. In a state where the flow rate of the reformed gas fed to the fuel cell 34 is held, if the flow rate of the cathode air corresponding to reduction of flow rate of oxygen consumed in the fuel cell 34 is decreased, decreasing is performed by the flow rate of hydrogen consumed in the fuel cell 34. The flow rate of hydrogen which is contained in the gas mixture fed to the combusting section 36 increases, and the oxygen proportion $\lambda$ of the gas mixture fed to the combusting section 36 decreases. Using such a method, the controller 15 computes the instruction current la and the cathode air instruction flow rate Fb. If a process of Step S223 is ended, the controller 15 causes the program to proceed to Step S224.

In Step S224, the controller 15 (oxygen proportion changing section) controls the inverter 13 such that the sweep current from the fuel cell 34 is gradually changed to the instruction current la which is computed in Step S223, for a predetermined amount of time (for example, several seconds to tens of seconds). At the same time, the controller 15 (oxygen proportion changing section) performs feedback control on the cathode air blower 11c1 based on the flow rate of the cathode air which is detected by the cathode air flow rate sensor 11 c2 such that the flow rate of the cathode air fed to the fuel cell 34 is gradually changed to the cathode air instruction flow rate Fb which is computed in Step S223, for a predetermined amount of time (for example, several seconds to tens of seconds). In this manner, occurrence of partial blow-off or occurrence of complete blow-off in the combusting section 36 due to rapidly changing of the flow rate of the gas mixture fed to the combusting section 36 and the combustible component is prevented by gradually changing the sweep current and the flow rate of the cathode air. The oxygen proportion $\lambda$ of the gas mixture introduced into the combusting section 36 gradually becomes the determination oxygen proportion $\lambda$a through a process of Step S224. If the process of Step S224 is ended, the controller 15 causes the program to proceed to Step S25.

In this manner, the controller 15 (oxygen proportion changing section) controls the inverter 13 (sweep current changing section) to reduce the sweep current compared to before the oxygen proportion $\lambda$ of the gas mixture fed to the combusting section 36 becomes the determination oxygen proportion $\lambda$a. The controller 15 controls the cathode air blower 11c1 (oxidant gas feeding section) to reduce the flow rate of the cathode air by the flow rate of the cathode air (oxidant gas) following a reduction in the sweep current. The controller 15 causes the oxygen proportion $\lambda$ of the gas mixture fed to the combusting section 36 to become the determination oxygen proportion $\lambda$a (Step S224 in Fig. 6).

Thus, the flow rate of hydrogen consumed in the fuel cell 34 is decreased by decreasing the sweep current, and the flow rate of hydrogen introduced into the combusting section 36 increases following a decrease in the flow rate. The flow rate of oxygen consumed in the fuel cell 34 is also decreased by decreasing the sweep current. However, the flow rate of oxygen fed to the combusting section 36 does not increase by decreasing the flow rate of the cathode air by the flow rate of the cathode air depending on a decrease of the sweep current. Thus, the flow rate of oxygen fed to the combusting section 36 does not increase and it is possible to reliably increase the flow rate of the combustible component fed to the combusting section 36. Further, it is possible to cause the oxygen proportion of the gas introduced into the combusting section 36 to become the determination oxygen proportion $\lambda$a. For this reason, it is possible to cause incomplete combustion to occur in the combusting section 36 and to reliably introduce the combustible component which is not combusted in the combusting section 36, into the catalytic combustor 28. Accordingly, it is possible to reliably determine degradation of the catalytic reaction in the catalytic combustor 28.

In this manner, the flow rate of the raw reforming material does not increase and the oxygen proportion of the gas introduced into the combusting section 36 becomes the determination oxygen proportion $\lambda$a, and thus determination of whether or not degradation of the catalytic reaction occurs in the catalytic combustor 28 is performed. Thus, overheating of the fuel cell module 11 due to increasing the flow rate of the raw reforming material is prevented.

The controller 15 (instruction current computing section) computes the instruction current la which is a current drawn from the fuel cell 34 and causes the oxygen proportion $\lambda$ of the gas mixture introduced into the combusting section 36 to become the determination oxygen proportion $\lambda$a, based on the flow rate of the raw reforming material fed by the raw material pump 11a5 (Step S223 in Fig. 6). The controller 15 (oxidant gas instruction flow rate computing section) computes the cathode air instruction flow rate Fb (oxidant gas instruction flow rate) which is the flow rate of the cathode air for causing the oxygen proportion $\lambda$ of the gas mixture introduced into the combusting section 36 to become the determination oxygen proportion $\lambda$a, based on the flow rate of the cathode air fed by the raw material pump 11a5 and the computed instruction current la (Step S223 in Fig. 6). The controller 15 (oxygen proportion changing section) controls the inverter 13 such that the sweep current which is drawn from the fuel cell 34 becomes the instruction current Ia. Further, the controller 15 controls the raw material pump 11a5 such that the flow rate of the cathode air fed to the fuel cell 34 becomes the cathode air instruction flow rate Fb (Step S224 in Fig. 6).

In this manner, the instruction current Ia for causing the oxygen proportion $\lambda$ of the gas mixture to become the determination oxygen proportion $\lambda a$ is computed and the sweep current which is drawn from the fuel cell 34 is changed to the instruction current Ia. The cathode air instruction flow rate Fb for causing the oxygen proportion $\lambda$ of the gas mixture to become the determination oxygen proportion $\lambda a$ is computed and the flow rate of the cathode air fed by the raw material pump 11a5 is changed to the cathode air instruction flow rate Fb. Thus, it is possible to cause the oxygen proportion $\lambda$ of the gas mixture fed to the combusting section 36 to become the determination oxygen proportion $\lambda a$ with high accuracy and high reliability. For this reason, it is possible to reliably cause incomplete combustion to occur in the combusting section 36, and to even more reliably introduce the combustible component which is not combusted in the combusting section 36, into the catalytic combustor 28. Accordingly, it is possible to even more reliably determine degradation of the catalytic reaction in the catalytic combustor 28.

The controller 15 (instruction current computing section) computes the instruction current Ia based on the temperature T1 of the reforming section 33 which is detected by the reforming-section temperature sensor 33a (reforming-section temperature detecting section). That is, the controller 15 (instruction fuel flow rate computing section) computes the composition of the reformed gas which is generated in the reforming section 33, based on the temperature T1 of the reforming section 33 (2 of Fig. 2 and Step S212 in Fig. 6). The controller 15 (instruction fuel flow rate computing section) computes the instruction current Ia based on the computed composition of the reformed gas. Thus, the raw material instruction flow rate Fa for causing the oxygen proportion $\lambda$ of the gas mixture introduced into the combusting section 36 to become the determination oxygen proportion $\lambda a$ is computed with even higher accuracy, compared to a case where computation based on the composition of the reformed gas is not performed. For this reason, it is possible to even more reliably cause the oxygen proportion $\lambda$ of the gas mixture fed to the combusting section 36 to become the determination oxygen proportion $\lambda a$.

Other embodiments

In the above-described embodiments, the oxygen proportion $\lambda$ of the gas mixture introduced into the combusting section 36 becomes the determination oxygen proportion $\lambda a$ which is lower than the incomplete combustion start oxygen proportion $\lambda 0$ and the anode off gas in the combusting section 36 is incompletely combusted. The flow rate of the combustible component contained in the combustion gas which is introduced into the catalytic combustor 28 from the combusting section 36 is increased, and determination of whether or not the catalytic reaction in the catalytic combustor 28 is degraded is performed. However, as illustrated in Fig. 2, an embodiment in which the oxygen proportion $\lambda$ of the gas mixture introduced into the combusting section 36 is caused to become equal to or higher than a second determination oxygen proportion $\lambda a2$ which is higher than an oxygen proportion $\lambda$ (for example, 1.6) in a normal operation determination of whether or not the catalytic reaction in the catalytic combustor 28 is degraded may be performed.

When the oxygen proportion $\lambda$ of the gas mixture introduced into the combusting section 36 becomes equal to or higher than the second determination oxygen proportion $\lambda a2$, the flow rate of the combustible component contained in the anode off gas is excessively small (lean fuel state) compared to the flow rate of oxygen and combustion in the combusting section 36 is partially or completely suspended. If suspension is performed, the proportion of the combustible component contained in the combustion gas which is introduced into the catalytic combustor 28 increases significantly. When the catalytic reaction in the catalytic combustor 28 is not degraded, the combustible component is combusted in the catalytic combustor 28. If combustion is performed, as indicated by the solid line in Fig, 2, the temperature T2 of the exhaust gas which is exhausted from the catalytic combustor 28 increases so as to become a second determination temperature T2b (indicated by 2 of Fig. 2) and it is determined that the catalytic reaction in the catalytic combustor 28 has not been degraded. When the catalytic reaction in the catalytic combustor 28 is degraded, the combustible component is not completely combusted in the catalytic combustor 28. For this reason, as indicated by the broken line in Fig. 2, the temperature T2 of the exhaust gas which is exhausted from the catalytic combustor 28 hardly increases and becomes lower than the second determination temperature T2b. It is determined that the catalytic reaction in the catalytic combustor 28 is degraded.

In the above-described embodiments, the temperature sensor 28b (temperature detecting section) detects the temperature T2 of the exhaust gas which is exhausted from the catalytic combustor 28. However, an embodiment in which the temperature sensor 28b (temperature detecting section) detects the temperature of the catalytic combustor 28 may be made. In the case of this embodiment, the controller 15 (determining section) determines whether or not the catalytic reaction in the catalytic combustor 28 is degraded, based on the temperature of the catalytic combustor 28 which is detected by the temperature sensor 28b.

In the above-described embodiments, the composition of the reformed gas is computed based on the temperature T1 of the reforming section 33 which is detected by the reforming-section temperature sensor 33a (reforming-section temperature detecting section). However, an embodiment in which a temperature sensor (reforming-section temperature detecting section) for detecting the temperature of the reformed gas which flows out from the reforming section 33 is provided and the composition of the reformed gas is computed based on the temperature of the reformed gas which is detected by this temperature sensor may be made.

An embodiment in which the quantity (sweep current value) of generated electricity in the fuel cell 34 is decreased and then a process of determining whether or not the catalytic reaction in the catalytic combustor 28 is degraded starts may be made. In the case of this embodiment, it is possible to reduce an amount of the combustible component which is discharged from the catalytic combustor 28 outwardly even though the combustible component is not completely combusted in the catalytic combustor 28 if the catalytic combustor 28 is deteriorated.

Fuel Cell System in Second Embodiment

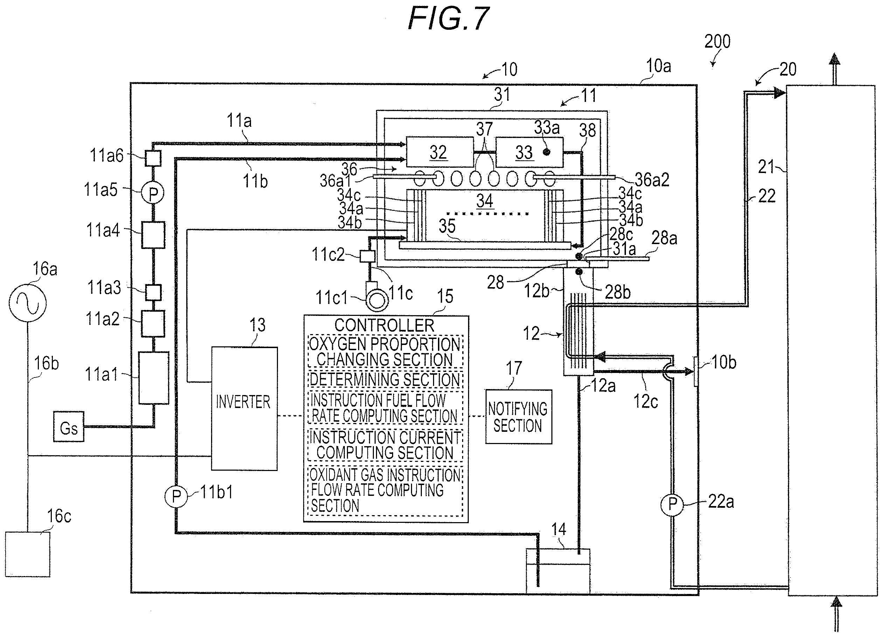

A fuel cell system 200 according to a second embodiment will be described below focusing on differences from the fuel cell system 100 in the above-described embodiment (first embodiment), with reference to Fig. 7. In the fuel cell system 200 according to the second embodiment, a second temperature sensor 28c (second temperature detecting section) which detects the temperature T3 of the combustion gas which is introduced into the catalytic combustor 28 from the combusting section 36 is provided in addition to the temperature sensor 28b (first temperature detecting section) which detects the temperature T2 of the exhaust gas which is exhausted from the catalytic combustor 28.

In Step S25 of Fig. 5 or Fig. 6, the controller 15 (determining section) computes a temperature difference $\Delta T$ obtained by subtracting the temperature T3 of the combustion gas (introduced into the catalytic combustor 28) which is detected by the second temperature sensor 28c from the temperature T2 of the exhaust gas (exhausted from the catalytic combustor 28) which is detected by the temperature sensor 28b. When it is determined that the temperature difference $\Delta T$ is lower than a defined temperature difference $\Delta Ta$ (YES in Step S25), the controller 15 (determining section) causes the program to proceed to Step S41. When it is determined that the temperature difference $\Delta T$ is not lower than a defined temperature difference $\Delta Ta$ (NO in Step S25), the controller 15 (determining section) causes the program to proceed to Step S31.

In the second embodiment, it is possible to reliably detect increasing of the temperature of the catalytic combustor 28 following an increase in the flow rate of the combustible component which is introduced into the catalytic combustor 28, regardless of the temperature of the combustion gas introduced into the catalytic combustor. For this reason, it is possible to determine whether or not the catalytic reaction in the catalytic combustor 28 is degraded, with even higher accuracy.

**Claims**

1. A fuel cell system (100, 200) comprising:

   a reforming section (33) that generates fuel from water for reforming and a raw reforming material;
   a fuel feeding section (11a5) that feeds the raw reforming material to the reforming section (33);
   a fuel cell (34) that generates electricity using the fuel generated by the reforming section (33), and an oxidant gas;
   a combusting section (36) that combusts an anode off gas containing a combustible component which is discharged from the fuel cell (34), with the oxidant gas;
   a catalytic combustor (28) into which a combustion gas is introduced and that combusts the combustible component contained in the combustion gas using a catalytic reaction, the combustion gas containing the combustible component which is discharged from the combusting section (36) and is not combusted;
   a temperature detecting section (28b) that detects a temperature of the catalytic combustor (28); and
   an oxygen proportion changing section (15) that changes an oxygen proportion to increase a flow rate of the combustible component which is introduced into the catalytic combustor (28) from the combusting section (36) and is not combusted, compared to the flow rate of the combustible component before the oxygen proportion is changed, in which the oxygen proportion is obtained by dividing a flow rate of oxygen introduced into the combusting section (36) by an ideal oxygen flow rate being necessary for causing the combustible component introduced into the combusting section (36) to be completely combusted,
   **characterized by**
   a determining section (15) that determines whether or not the catalytic reaction occurring in the catalytic combustor (28) is degraded based on the temperature of the catalytic combustor (28), which is detected by the temperature detecting section (28b), when the oxygen proportion changing section (15) decreases the oxygen proportion so as to become a determination oxygen proportion lower than an incomplete combustion start oxygen proportion which causes the combustible component to be incompletely combusted in the combusting section (28).

2. The fuel cell system (100, 200) according to claim 1, wherein
the oxygen proportion changing section (15) decreases the oxygen proportion so as to become the determination oxygen proportion by increasing a flow rate of the fuel which is fed by the fuel feeding section (11a5) compared to before the oxygen proportion is decreased so as to become the determination oxygen proportion.

3. The fuel cell system (100, 200) according to claim 1, further comprising:

   a sweep current changing section (13) that changes a sweep current which is a current drawn from the fuel cell (34); and
   an oxidant gas feeding section (11c1) that feeds the oxidant gas to the fuel cell (34),
   wherein the oxygen proportion changing section (15) decreases the oxygen proportion so as to become the determination oxygen proportion by controlling the sweep current changing section (13) to decrease the sweep current and controlling the oxidant gas feeding section (11c1) to decrease a flow rate of the oxidant gas by a flow rate of the oxidant gas which occurs following a decrease in the sweep current compared to before the oxygen proportion is decreased so as to become the determination oxygen proportion.

4. The fuel cell system (100, 200) according to claim 2, further comprising:

   an instruction fuel flow rate computing section (15) that computes an instruction fuel flow rate which is a flow rate of the fuel and is for decreasing the oxygen proportion so as to become the determination oxygen proportion, based on a sweep current which is a current drawn from the fuel cell (34), and a flow rate of the oxidant gas fed to the fuel cell (34),
   wherein the oxygen proportion changing section (15) controls the fuel feeding section (11a5) to cause the flow rate of the fuel fed by the fuel feeding section (11a5) to become the instruction fuel flow rate.

5. The fuel cell system (100, 200) according to claim 3, further comprising:

   an instruction current computing section (15) that computes an instruction current which is a current drawn from the fuel cell (34) and is for decreasing the oxygen proportion so as to become the determination oxygen proportion, based on the flow rate of the fuel fed by the fuel feeding section (11a5); and
   an oxidant gas instruction flow rate computing section (15) that computes an oxidant gas instruction flow rate which is a flow rate of the oxidant gas and is for decreasing the oxygen proportion so as to become the determination oxygen proportion, based on the flow rate of the fuel fed by the fuel feeding section (11a5), and the instruction current computed by the instruction current computing section (15),
   wherein the oxygen proportion changing section (15) controls the sweep current changing section (13) to cause the sweep current drawn from the fuel cell (34) to become the instruction current, and controls the oxidant gas feeding section (11c1) to cause the flow rate of the oxidant gas fed to the fuel cell (34) to become the oxidant gas instruction flow rate.

6. The fuel cell system (100, 200) according to claim 4, further comprising:

   a reforming-section temperature detecting section (33a) that detects a temperature of the reforming section (33), wherein the instruction fuel flow rate computing section (15) computes the instruction fuel flow rate based on the temperature of the reforming section (33) which is detected by the reforming-section temperature detecting section (33a).

7. The fuel cell system (100, 200) according to claim 5, further comprising:

   a reforming-section temperature detecting section (33a) that detects a temperature of the reforming section (33), wherein the instruction current computing section (15) computes the instruction current based on the temperature of the reforming section (33) which is detected by the reforming-section temperature detecting section (33a).

8. The fuel cell system (100) according to any one of claims 1 to 7, wherein
the temperature detecting section (28b) detects the temperature of an exhaust gas which is exhausted from the catalytic combustor (28), or the temperature of the catalytic combustor (28), and
the determining section (15) determines that the catalytic reaction of the catalytic combustor (28) is degraded, if the temperature detected by the temperature detecting section (28b) is less than a determination temperature when the oxygen proportion changing section (15) changes the oxygen proportion.

9. The fuel cell system (200) according to any one of claims 1 to 7, wherein
the temperature detecting section is configured from a first temperature detecting section (28b) and a second temperature detecting section (28c), the first temperature detecting section (28b) detecting a temperature of an exhaust gas which is exhausted from the catalytic combustor (28) or a temperature of the catalytic combustor (28), the second temperature detecting section (28c) detecting a temperature of the combustion gas introduced into the catalytic combustor (28), and
the determining section (15) determines that the catalytic reaction of the catalytic combustor (28) is degraded, if a temperature difference is lower than a defined temperature difference when the oxygen proportion changing section (15) changes the oxygen proportion, in which the temperature difference is obtained by subtracting the temperature detected by the second temperature detecting section (28c) from the temperature detected by the first temperature detecting section (28b).

## Patentansprüche

1. Brennstoffzellensystem (100, 200) mit:

   einem Reformierabschnitt (33), der aus Wasser zum Reformieren und aus einem Ausgangsreformiermaterial Brennstoff erzeugt;
   einem Brennstoff-Zuführungsabschnitt (11a5), der dem Reformierabschnitt (33) das Ausgangsreformiermaterial zuführt;
   einer Brennstoffzelle (34), die unter Verwendung des vom Reformierabschnitt (33) erzeugten Brennstoffs und eines Oxidationsmittelgases Elektrizität erzeugt;
   einem Verbrennungsabschnitt (36), der mit dem Oxidationsmittelgas ein Anodenabgas verbrennt, das einen brennbaren Bestandteil enthält, der von der Brennstoffzelle (34) abgegeben wird;
   einer katalytischen Brennkammer (28), in die ein Verbrennungsgas eingeleitet wird und die den brennbaren Bestandteil, der im Verbrennungsgas enthalten ist, mittels einer katalytischen Reaktion verbrennt, wobei das Verbrennungsgas den brennbaren Bestandteil enthält, der vom Verbrennungsabschnitt (36) abgegeben wird und nicht verbrannt ist;
   einem Temperaturerfassungsabschnitt (28b), der eine Temperatur der katalytischen Brennkammer (28) erfasst; und
   einem Sauerstoffanteil-Änderungsabschnitt (15), der einen Sauerstoffanteil ändert, um eine Durchflussmenge des brennbaren Bestandteils, die vom Verbrennungsabschnitt (36) in die katalytische Brennkammer (28) eingeleitet wird und nicht verbrannt ist, verglichen mit der Durchflussmenge des brennbaren Bestandteils, bevor der Sauerstoffanteil geändert wird, zu erhöhen, wobei der Sauerstoffanteil ermittelt wird, indem eine Durchflussmenge an Sauerstoff, die in den Verbrennungsabschnitt (36) eingeleitet wird, durch eine ideale Sauerstoffdurchflussmenge geteilt wird, die benötigt wird, um den brennbaren Bestandteil, der in den Verbrennungsabschnitt (36) eingeleitet wird, dazu zu bringen, vollständig verbrannt zu werden,
   **gekennzeichnet durch**
   einen Bestimmungsabschnitt (15), der beruhend auf der Temperatur der katalytischen Brennkammer (28), die vom Temperaturerfassungsabschnitt (28b) erfasst wird, bestimmt, ob die in der katalytischen Brennkammer (28) stattfindende katalytische Reaktion geschwächt ist, wenn der Sauerstoffanteil-Änderungsabschnitt (15) den Sauerstoffanteil soweit senkt, dass er ein Bestimmungssauerstoffanteil wird, der niedriger als ein Sauerstoffanteil für einen unvollständigen Verbrennungsbeginn ist, der den brennbaren Bestandteil dazu bringt, im Verbrennungsabschnitt (28) unvollständig verbrannt zu werden.

2. Brennstoffzellensystem (100, 200) nach Anspruch 1, wobei
der Sauerstoffanteil-Änderungsabschnitt (15) den Sauerstoffanteil soweit senkt, dass er der Bestimmungssauerstoffanteil wird, indem er verglichen damit, bevor der Sauerstoffanteil soweit gesenkt wird, dass er der Bestimmungssauerstoffanteil wird, eine Durchflussmenge des Brennstoffs erhöht, die vom Brennstoff-Zuführungsabschnitt (11a5) zugeführt wird.

3. Brennstoffzellensystem (100, 200) nach Anspruch 1, mit zudem:

   einem Durchlaufstrom-Änderungsabschnitt (13), der einen Durchlaufstrom ändert, der ein Strom ist, der aus der Brennstoffzelle (34) entnommen wird; und

einem Oxidationsmittelgas-Zuführungsabschnitt (11c1), der der Brennstoffzelle (34) das Oxidationsmittelgas zuführt,

wobei der Sauerstoffanteil-Änderungsabschnitt (15) den Sauerstoffanteil soweit senkt, dass er der Bestimmungssauerstoffanteil wird, indem er den Durchlaufstrom-Änderungsabschnitt (13) so steuert, dass er den Durchlaufstrom verringert, und den Oxidationsmittelgas-Zuführungsabschnitt (11c1) so steuert, dass er eine Durchflussmenge des Oxidationsmittelgases verglichen damit, bevor der Sauerstoffanteil soweit gesenkt wird, dass er der Bestimmungssauerstoffanteil wird, um eine Durchflussmenge des Sauerstoffgases verringert, die infolge einer Verringerung des Durchlaufstroms auftritt.

4. Brennstoffzellensystem (100, 200) nach Anspruch 2, mit zudem:

einem Brennstoff-Befehlsdurchflussmengen-Berechnungsabschnitt (15), der beruhend auf einem Durchlaufstrom, der ein Strom ist, der aus der Brennstoffzelle (34) entnommen wird, und einer Durchflussmenge des Oxidationsmittelgases, das der Brennstoffzelle (34) zugeführt wird, eine Brennstoff-Befehlsdurchflussmenge berechnet, die eine Durchflussmenge des Brennstoffs ist und dazu dient, den Sauerstoffanteil soweit zu senken, dass er der Bestimmungssauerstoffanteil wird,

wobei der Sauerstoffanteil-Änderungsabschnitt (15) den Brennstoff-Zuführungsabschnitt (11a5) so steuert, dass er die Durchflussmenge des Brennstoffs, die vom Brennstoff-Zuführungsabschnitt (11a5) zugeführt wird, dazu bringt, die Brennstoff-Befehlsdurchflussmenge zu werden.

5. Brennstoffzellensystem (100, 200) nach Anspruch 3, mit zudem:

einem Befehlsstrom-Berechnungsabschnitt (15), der beruhend auf der Durchflussmenge des Brennstoffs, die vom Brennstoff-Zuführungsabschnitt (11a5) zugeführt wird, einen Befehlsstrom berechnet, der ein Strom ist, der aus der Brennstoffzelle (34) entnommen wird und dazu dient, den Sauerstoffanteil soweit zu senken, dass er der Bestimmungssauerstoffanteil wird; und

einem Oxidationsmittelgas-Befehlsdurchflussmengen-Berechnungsabschnitt (15), der beruhend auf der Durchflussmenge des Brennstoffs, die vom Brennstoff-Zuführungsabschnitt (11a5) zugeführt wird, und dem vom Befehlsstrom-Berechnungsabschnitt (15) berechneten Befehlsstrom eine Oxidationsmittelgas-Befehlsdurchflussmenge berechnet, die eine Durchflussmenge des Oxidationsmittelgases ist und dazu dient, den Sauerstoffanteil soweit zu senken, dass er der Bestimmungssauerstoffanteil wird,

wobei der Sauerstoffanteil-Änderungsabschnitt (15) den Durchlaufstrom-Änderungsabschnitt (13) so steuert, dass er den Durchlaufstrom, der aus der Brennstoffzelle (34) entnommen wird, dazu bringt, der Befehlsstrom zu werden, und den Oxidationsmittelgas-Zuführungsabschnitt (11c1) so steuert, dass er die Durchflussmenge des Oxidationsmittelgases, das der Brennstoffzelle (34) zugeführt wird, dazu bringt, die Oxidationsmittelgas-Befehlsdurchflussmenge zu werden.

6. Brennstoffzellensystem (100, 200) nach Anspruch 4, mit zudem:

einem Reformierabschnitt-Temperaturerfassungsabschnitt (33a), der eine Temperatur des Reformierabschnitts (33) erfasst,

wobei der Brennstoff-Befehlsdurchflussmengen-Berechnungsabschnitt (15) die Brennstoff-Befehlsdurchflussmenge beruhend auf der Temperatur des Reformierabschnitts (33) berechnet, die vom Reformierabschnitt-Temperaturerfassungsabschnitt (33a) erfasst wird.

7. Brennstoffzellensystem (100, 200) nach Anspruch 5, mit zudem:

einem Reformierabschnitt-Temperaturerfassungsabschnitt (33a), der eine Temperatur des Reformierabschnitts (33) erfasst,

wobei der Befehlsstrom-Berechnungsabschnitt (15) den Befehlsstrom beruhend auf der Temperatur des Reformierabschnitts (33) berechnet, die vom Reformierabschnitt-Temperaturerfassungsabschnitt (33a) erfasst wird.

8. Brennstoffzellensystem (100) nach einem der Ansprüche 1 bis 7, wobei
der Temperaturerfassungsabschnitt (28b) die Temperatur eines Abgases, das aus der katalytischen Brennkammer (28) ausströmt, oder die Temperatur der katalytischen Brennkammer (28) erfasst und
der Bestimmungsabschnitt (15) bestimmt, dass die katalytische Reaktion der katalytischen Brennkammer (28) geschwächt ist, falls die vom Temperaturerfassungsabschnitt (28b) erfasste Temperatur kleiner als eine Bestimmungstemperatur ist, wenn der Sauerstoffanteil-Änderungsabschnitt (15) den Sauerstoffanteil ändert.

9. Brennstoffzellensystem (200) nach einem der Ansprüche 1 bis 7, wobei
der Temperaturerfassungsabschnitt von einem ersten Temperaturerfassungsabschnitt (28b) und einem zweiten Temperaturerfassungsabschnitt (28c) gebildet wird, wobei der erste Temperaturerfassungsabschnitt (28b) eine Temperatur eines Abgases, das aus der katalytischen Brennkammer (28) ausströmt, oder eine Temperatur der katalytischen Brennkammer (28) erfasst und der zweite Temperaturerfassungsabschnitt (28c) eine Temperatur des Verbrennungsgases erfasst, das in die katalytische Brennkammer (28) eingeleitet wird, und
der Bestimmungsabschnitt (15) bestimmt, dass die katalytische Reaktion der katalytischen Brennkammer (28) geschwächt ist, falls eine Temperaturdifferenz kleiner als eine festgelegte Temperaturdifferenz ist, wenn der Sauerstoffanteil-Änderungsabschnitt (15) den Sauerstoffanteil ändert, wobei die Temperaturdifferenz ermittelt wird, indem die vom zweiten Temperaturerfassungsabschnitt (28c) erfasste Temperatur von der vom ersten Temperaturerfassungsabschnitt (28b) erfassten Temperatur abgezogen wird.

**Revendications**

1. Système de pile à combustible (100, 200), comprenant :

   une section de reformage (33) qui produit du combustible à partir d'eau pour le reformage et une matière première de reformage ;
   une section d'alimentation en combustible (11a5) qui amène la matière première de reformage à la section de reformage (33) ;
   une pile à combustible (34) qui génère de l'électricité en utilisant le combustible produit par la section de reformage (33) et un gaz oxydant ;
   une section de combustion (36) qui brûle un effluent gazeux d'anode contenant un composant combustible qui est évacué de la pile à combustible (34), avec le gaz oxydant ;
   un brûleur catalytique (28) dans lequel est introduit un gaz de combustion et qui brûle le composant combustible présent dans le gaz de combustion en utilisant une réaction catalytique, le gaz de combustion contenant le composant combustible qui est évacué de la section de combustion (36) et n'est pas brûlé ;
   une section de détection de la température (28b) qui détecte une température du brûleur catalytique (28) ; et
   une section de modification de la proportion d'oxygène (15) qui modifie une proportion d'oxygène afin d'augmenter un débit du composant combustible qui est introduit dans le brûleur catalytique (28) depuis la section de combustion (36) et n'est pas brûlé, par rapport au débit du composant combustible avant que la proportion d'oxygène ne soit modifiée, où la proportion d'oxygène est obtenue en divisant un débit de l'oxygène introduit dans la section de combustion (36) par un débit d'oxygène idéal nécessaire pour induire la combustion complète du composant combustible introduit dans la section de combustion (36),
   **caractérisé par**
   une section de détermination (15) qui détermine si oui ou non la réaction catalytique se produisant dans le brûleur catalytique (28) est dégradée sur la base de la température du brûleur catalytique (28), qui est détectée par la section de détection de la température (28b), quand la section de modification de la proportion d'oxygène (15) diminue la proportion d'oxygène pour qu'elle devienne une proportion d'oxygène de détermination inférieure à une proportion d'oxygène de début de combustion incomplète qui induit la combustion incomplète du composant combustible dans la section de combustion (28).

2. Système de pile à combustible (100, 200) selon la revendication 1, dans lequel
   la section de modification de la proportion d'oxygène (15) diminue la proportion d'oxygène pour qu'elle devienne la proportion d'oxygène de détermination en augmentant un débit du combustible qui est amené par la section d'alimentation en combustible (11a5) par rapport à avant que la proportion d'oxygène soit diminuée afin de devenir la proportion d'oxygène de détermination.

3. Système de pile à combustible (100, 200) selon la revendication 1, comprenant en outre :

   une section de modification du courant de balayage (13) qui modifie un courant de balayage qui est un courant tiré depuis la pile à combustible (34) ; et
   une section d'alimentation en gaz oxydant (11c1) qui amène le gaz oxydant à la pile à combustible (34),
   dans lequel la section de modification de la proportion d'oxygène (15) diminue la proportion d'oxygène pour qu'elle devienne la proportion d'oxygène de détermination en contrôlant la section de modification du courant de balayage (13) afin de diminuer le courant de balayage et en contrôlant la section d'alimentation en gaz oxydant (11c1) afin de diminuer un débit du gaz oxydant par un débit du gaz oxydant qui intervient à la suite d'une baisse du courant de balayage par rapport à avant que la proportion d'oxygène soit diminuée afin de devenir la proportion d'oxygène de détermination.

4. Système de pile à combustible (100, 200) selon la revendication 2, comprenant en outre :

une section de calcul du débit du combustible de commande (15) qui calcule un débit du combustible de commande qui est un débit du combustible et est destiné à diminuer la proportion d'oxygène pour qu'elle devienne la proportion d'oxygène de détermination, sur la base d'un courant de balayage qui est un courant tiré depuis la pile à combustible (34), et un débit du gaz oxydant amené à la pile à combustible (34), dans lequel la section de modification de la proportion d'oxygène (15) contrôle la section d'alimentation en combustible (11a5) pour que le débit du combustible amené par la section d'alimentation en combustible (11a5) devienne le débit du combustible de commande.

5. Système de pile à combustible (100, 200) selon la revendication 3, comprenant en outre :

une section de calcul du courant de commande (15) qui calcule un courant de commande qui est un courant tiré depuis la pile à combustible (34) et est destinée à diminuer la proportion d'oxygène pour qu'elle devienne la proportion d'oxygène de détermination, sur la base du débit de combustible amené par la section d'alimentation en combustible (11a5) ; et
une section de calcul de débit de commande du gaz oxydant (15) qui calcule un débit de commande du gaz oxydant qui est un débit du gaz oxydant et est destiné à diminuer la proportion d'oxygène pour qu'elle devienne la proportion d'oxygène de détermination, sur la base du débit du combustible alimenté par la section d'alimentation en carburant (11a5), et le courant de commande calculé par la section de calcul du courant de commande (15),
dans lequel la section de modification de la proportion d'oxygène (15) contrôle la section de modification du courant de balayage (13) pour que le courant de balayage tiré depuis la pile à combustible (34) devienne le courant de commande, et contrôle la section d'alimentation en gaz oxydant (11c1) pour que le débit du gaz oxydant amené à la pile à combustible (34) devienne le débit de commande du gaz oxydant.

6. Système de pile à combustible (100, 200) selon la revendication 4, comprenant en outre :

une section de détection de la température de la section de reformage (33a) qui détecte une température de la section de reformage (33),
dans lequel la section de calcul du débit du combustible de commande (15) calcule le débit du combustible de commande sur la base de la température de la section de reformage (33) qui est détectée par la section de détection de la température de la section de reformage (33a).

7. Système de pile à combustible (100, 200) selon la revendication 5, comprenant en outre :

une section de détection de la température de la section de reformage (33a) qui détecte une température de la section de reformage (33),
dans lequel la section de calcul du courant de commande (15) calcule le courant de commande sur la base de la température de la section de reformage (33) qui est détectée par la section de détection de la température de la section de reformage (33a).

8. Système de pile à combustible (100) selon l'une quelconque des revendications 1 à 7, dans lequel
la section de détection de la température (28b) détecte la température d'un gaz d'échappement qui est évacué par le brûleur catalytique (28) ou la température du brûleur catalytique (28), et
la section de détermination (15) détermine que la réaction catalytique du brûleur catalytique (28) est dégradée si la température détectée par la section de détection de la température (28b) est inférieure à une température de détermination quand la section de modification de la proportion d'oxygène (15) modifie la proportion d'oxygène.

9. Système de pile à combustible (200) selon l'une quelconque des revendications 1 à 7, dans lequel
la section de détection de la température est configurée à partir d'une première section de détection de la température (28b) et d'une seconde section de détection de la température (28c), la première section de détection de la température (28b) détectant une température d'un gaz d'échappement qui est évacué depuis le brûleur catalytique (28) ou une température du brûleur catalytique (28), la seconde section de détection de la température (28c) détectant une température du gaz de combustion introduit dans le brûleur catalytique (28), et

la section de détermination (15) détermine que la réaction catalytique du brûleur catalytique (28) est dégradée si une différence de température est inférieure à une différence de température définie quand la section de modification de la proportion d'oxygène (15) modifie la proportion d'oxygène, où la différence de température est obtenue en soustrayant la température détectée par la seconde section de détection de la température (28c) à la température détectée par la première section de détection de la température (28b).

FIG.1

# FIG.2

TEMPERATURE T2 OF EXHAUST GAS EXHAUSTED FROM CATALYTIC COMBUSTOR

T2b

T2a

2

1

INCOMPLETE COMBUSTION

COMBUSTION

SUSPENSION OF COMBUSTION

0

$\lambda a$

$\lambda 0$

$\lambda a2$

OXYGEN PROPORTION $\lambda$ OF GAS MIXTURE INTRODUCED INTO COMBUSTING SECTION

EP 2 963 718 B1

# FIG.3

EP 2 963 718 B1

FIG.4

# FIG.5

FIRST CATALYTIC REACTION DEGRADATION
DETERMINATION PROCESSING

START GENERATION OF ELECTRICITY ~S11

S12

START COMPUTATION OF COMPOSITION OF REFORMED GAS BASED ON TEMPERATURE T1 OF COMBUSTING SECTION

S13

START COMPUTATION OF FLOW RATE OF HYDROGEN TO BE CONSUMED, BASED ON DRAWN CURRENT

START COMPUTATION OF FLOW RATE OF OXYGEN CONTAINED IN CATHODE OFF GAS BASED ON FLOW RATE OF OXYGEN TO BE CONSUMED, FLOW RATE OF CATHODE AIR, AND FLOW RATE OF HYDROGEN TO BE CONSUMED

S14

START COUNTING OF TIMER TM ~S21

S22

TIMER TM > FIRST DEFINED TIME TMa

NO

YES

S23

COMPUTE RAW MATERIAL INSTRUCTION FLOW RATE Fa FOR DETERMINATION OXYGEN PROPORTION λa

CHANGE FLOW RATE OF RAW REFORMING MATERIAL FED BY RAW MATERIAL PUMP 11, TO RAW MATERIAL INSTRUCTION FLOW RATE Fa ~S24

RESET TIMER TM ~S31

S25

TEMPERATURE T2 OF EXHAUST GAS EXHAUSTED FROM CATALYTIC COMBUSTOR < DETERMINATION TEMPERATURE T2a

NO

YES

S41

DOES SECOND DEFINED TIME TMb ELAPSE?

NO

YES

DETERMINE DEGRADATION OF CATALYTIC REACTION ~S42

PERFORM NOTIFICATION OF ABNORMALITY ~S43

END

26

## FIG.6

SECOND CATALYTIC REACTION DEGRADATION
DETERMINATION PROCESSING

START GENERATION OF ELECTRICITY —S11

START COMPUTATION OF FLOW RATE OF EACH OF
COMBUSTIBLE COMPONENTS IN REFORMED GAS
BASED ON TEMPERATURE T1 OF COMBUSTING
SECTION AND FLOW RATE OF RAW REFORMING MATERIAL —S212

START COUNTING OF TIMER TM —S21

S22
TIMER TM >
FIRST DEFINED TIME
TMa
NO

YES

S223
COMPUTE INSTRUCTION CURRENT
Ia AND CATHODE AIR
INSTRUCTION FLOW RATE Fb
FOR DETERMINATION OXYGEN
PROPORTION $\lambda$a

CHANGE DRAWN CURRENT TO
INSTRUCTION CURRENT Ia AND
CHANGE CATHODE AIR
FLOW RATE TO CATHODE AIR
INSTRUCTION FLOW RATE Fb —S224

RESET TIMER TM —S31

S25
TEMPERATURE
T2 OF EXHAUST GAS EXHAUSTED
FROM CATALYTIC COMBUSTOR < DETERMINATION
TEMPERATURE
T2a
NO

YES

S41
DOES
SECOND DEFINED TIME
TMb ELAPSE?
NO

YES

DETERMINE DEGRADATION
OF CATALYTIC REACTION —S42

PERFORM NOTIFICATION
OF ABNORMALITY —S43

END

*FIG.7*

EP 2 963 718 B1

CONTROLLER

OXYGEN PROPORTION CHANGING SECTION

DETERMINING SECTION

INSTRUCTION FUEL FLOW RATE COMPUTING SECTION

INSTRUCTION CURRENT COMPUTING SECTION

OXIDANT GAS INSTRUCTION FLOW RATE COMPUTING SECTION

INVERTER

NOTIFYING SECTION

**EP 2 963 718 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002316801 A

- EP 2639874 A2